# EUROPEAN PATENT SPECIFICATION

(11) **EP 4 315 329 B1**
(45) Date of publication and mention of the grant of the patent: **23.09.2026**
(21) Application number: 22717263.2
(22) Date of filing: 23.03.2022
(51) Int. Cl.: G10L 21/10, G06F 16/683, G06F 16/783, G10L 21/12, G10L 25/30, G10L 25/54, G10L 17/26

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS, ET PROGRAMME

(30) Priority: 24.03.2021 US 202163165338 P
(43) Date of publication of application: 07.02.2024
(73) Proprietor: Sony Group Corporation, Tokyo 108-0075 (JP)
(72) Inventor: YAMAMOTO, Yuki, Tokyo, 108--0075 (JP); OSAKO, Keiichi, Tokyo, 108--0075 (JP)
(74) Representative: 2SPL Patentanwälte PartG mbB
(86) International application number: PCT/IB2022/052666
(87) International publication number: WO 2022/201069

(56) References cited:
- US-A1- 2008 264 239
- US-A1- 2019 272 830
- US-A1- 2019 362 022
- US-A1- 2020 160 845

## Description

### [Technical Field]

The present technology relates to an information processing device, an information processing method, and a program, and specifically, relates to an information processing device, an information processing method, and a program that enable reduction in work cost.

### [Background Art]

Technologies related to production and management of various types of content including music content and video content such as movies, drama series, TV news, or moving images on moving-image sharing websites, have been conventionally proposed.

In addition, there have been some tools for displaying time waveforms or the like of audio signals forming content such that various edits can be performed on the audio signals (for example, see Non Patent Document 1).

Patent Document 1 proposes an audio labeling tool for rapidly and efficiently building a labeled data set preferably comprising audio files with annotations denoting speaker transcriptions, speaker identity, periods of silence, background noise, and speaker emotion labels. The tool provides a configurable user interface (UI) with keyboard shortcuts and menu items for streamlined user-guided markup of audio files with context specific labeling and transcription notes. Human audio file labelers will preferably leverage the labeling tool and configurable user interface and menu to rapidly annotate, validate, and build labeled data sets, at scale, of time sliced audio files.

Patent Document 2 proposes a recording device to record a video and an imaging time, and a voice. Based on the voice, a sound parameter calculator calculates a sound parameter for specifying magnitude of the voice in a monitoring area at the imaging time for each of pixels and for each of certain times. A sound parameter storage unit stores the sound parameter. A sound parameter display controller superimposes a voice heat map on a captured image of the monitoring area and displays the superimposed image on a monitor. At this time, the sound parameter display controller displays the voice heat map based on a cumulative time value of magnitude of the voice, according to designation of a time range.

Patent Document 3 proposes sound recognition devices and methods. A system is provided that utilizes a system of tonal and rhythmic visualization methods to recognize different environmental sounds so as to accurately identify certain species of wildlife and other elements of nature.

Patent Document 4 proposes automatically recognizing speech content of an audio stream that may contain multiple different classes of speech content, by receiving, by an audio capture device, an audio stream; outputting, by one or more classifiers, in response to an inputting to the one or more classifiers of digital data that has been extracted from the audio stream, score data. A score of the score data indicates a likelihood that a particular time segment of the audio stream contains speech of a particular class. The one or more classifiers use one or more machine-learned models that have been trained to recognize audio of one or more particular classes to determine the score data; using a sliding time window process, selecting particular scores from the score data; using the selected particular scores, determining and outputting one or more decisions as to whether one or more particular time segments of the audio stream contain speech of one or more particular classes. The one or more decisions are outputted within a real-time time interval of the receipt of the audio stream. The one or more decisions are used by downstream processing of the audio stream to control any one or more of the following: labeling the audio stream, segmenting the audio stream, diarizing the audio stream.

### [Prior Art Document]

### [Non Patent Document]

[Non Patent Document 1]
Pro Tools(R) Reference Guide Version 2018.7, [online], Avid Technology, Inc., [retrieved on March 10, 2021],
<http://resources.avid.com/SupportFiles/PT/Pro_Tools_Refe rence_Guide_2018.7.pdf>
[Patent Document 1] US 2019/362022 A1
[Patent Document 2] US 2019/272830 A1
[Patent Document 3] US 2008/264239 A1
[Patent Document 4] US 2020/160845 A1

### [Summary of the Invention]

### [Problem to be Solved by the Invention]

However, high work cost is required for producing and managing content.

For example, during production and management of content, an exploration for a time section of a desired sound among recorded sounds is conducted by a worker through a trial-listening confirmation. Such a trial-listening confirmation work incurs an increase of the production and management work cost.

The present technology has been made in view of the above circumstances, and it is intended to enable reduction in the work cost.

### [Means for Solving the Problem]

An information processing device according to one aspect of the present invention is provided by claim 1.

An information processing method or a program according to one aspect of the present invention is provided by claims 14 and 15, respectively.

### [Brief Description of the Drawings]

[FIG. 1]

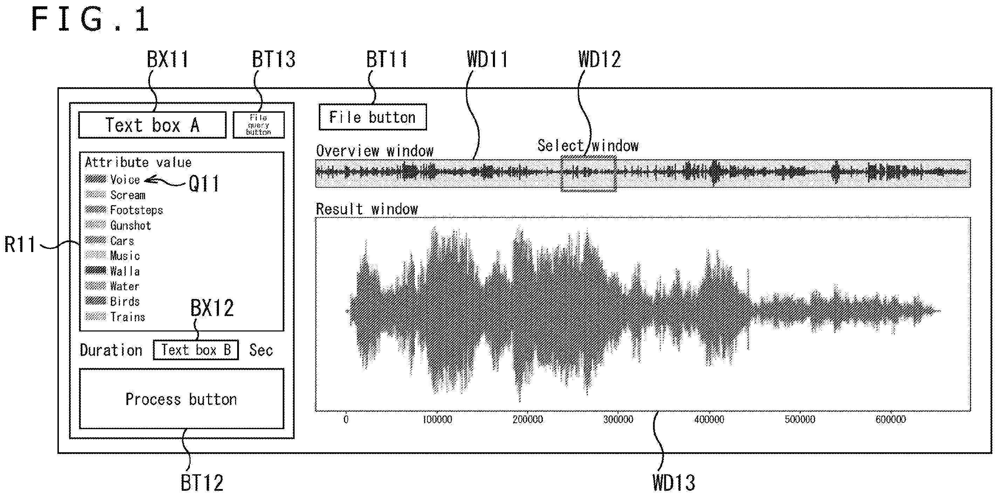

   FIG. 1 is a diagram depicting a display example of an exploration screen.
[FIG. 2]

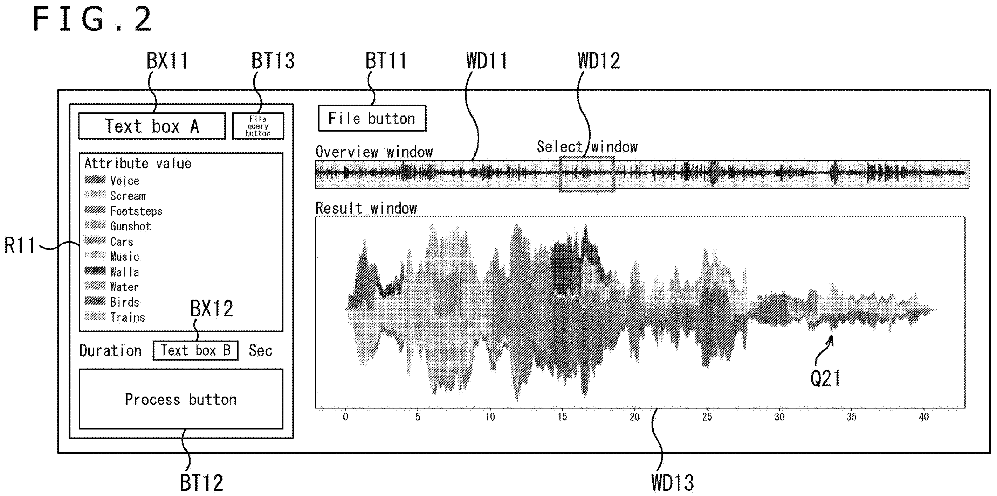

   FIG. 2 is a diagram depicting a display example of a result window.
[FIG. 3]

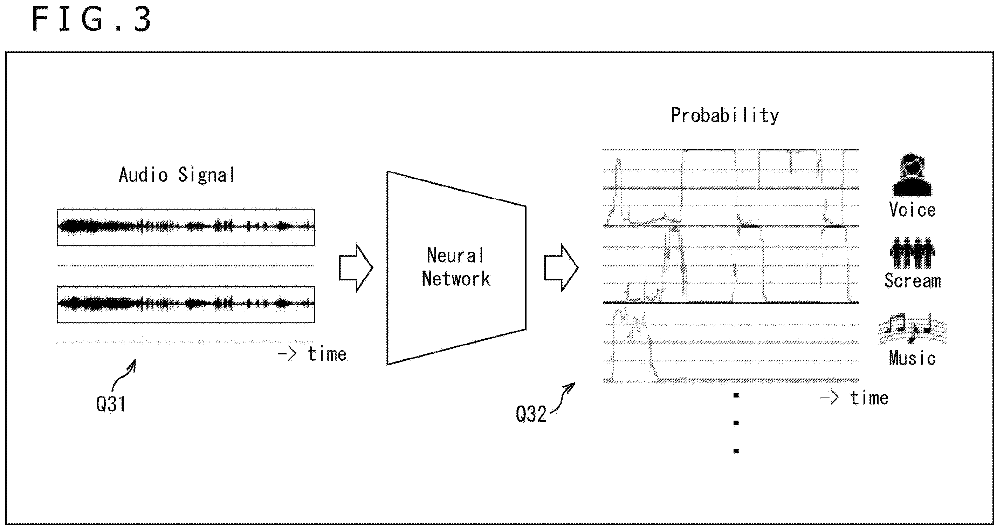

   FIG. 3 is a diagram for explaining calculation of a degree of coincidence.
[FIG. 4]

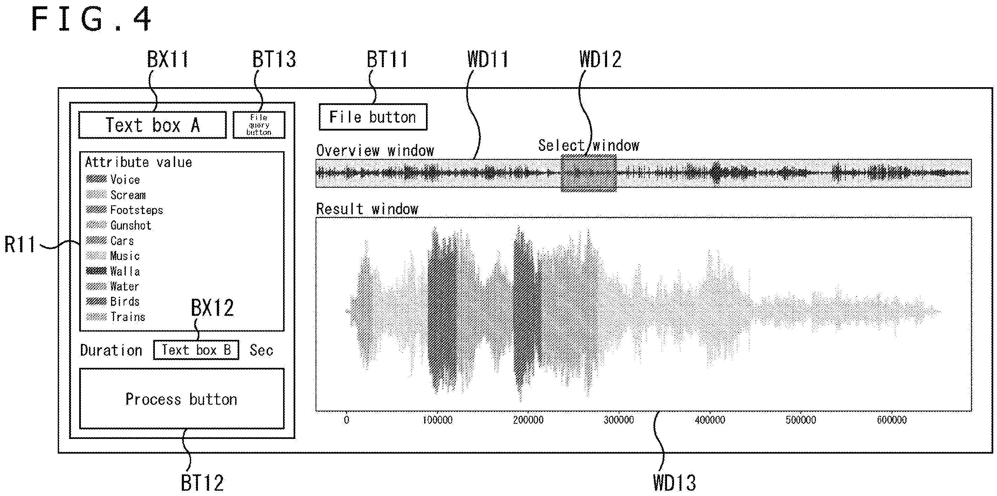

   FIG. 4 is a diagram depicting another display example of the exploration screen.
[FIG. 5]

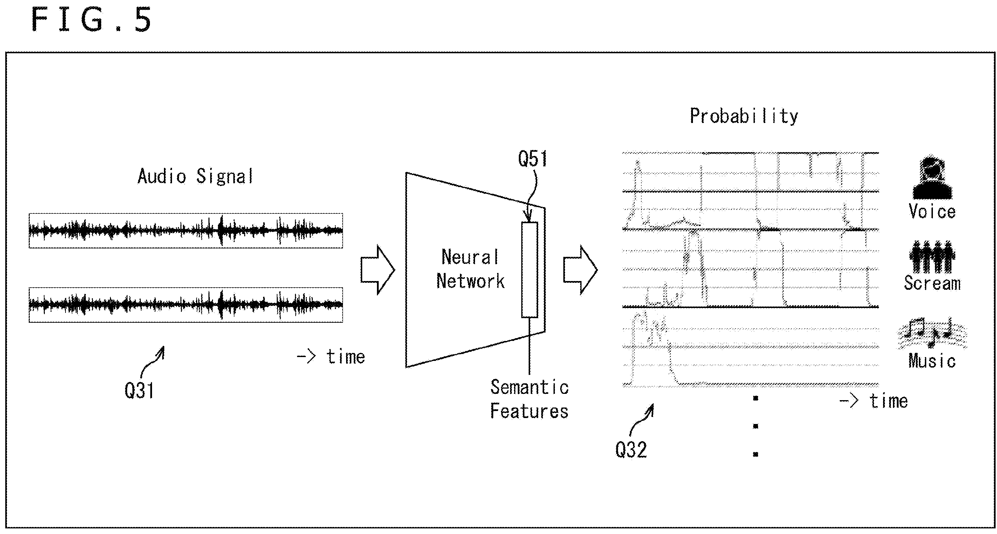

   FIG. 5 is a diagram for explaining an output vector from a next-to-last layer of a neural network.
[FIG. 6]

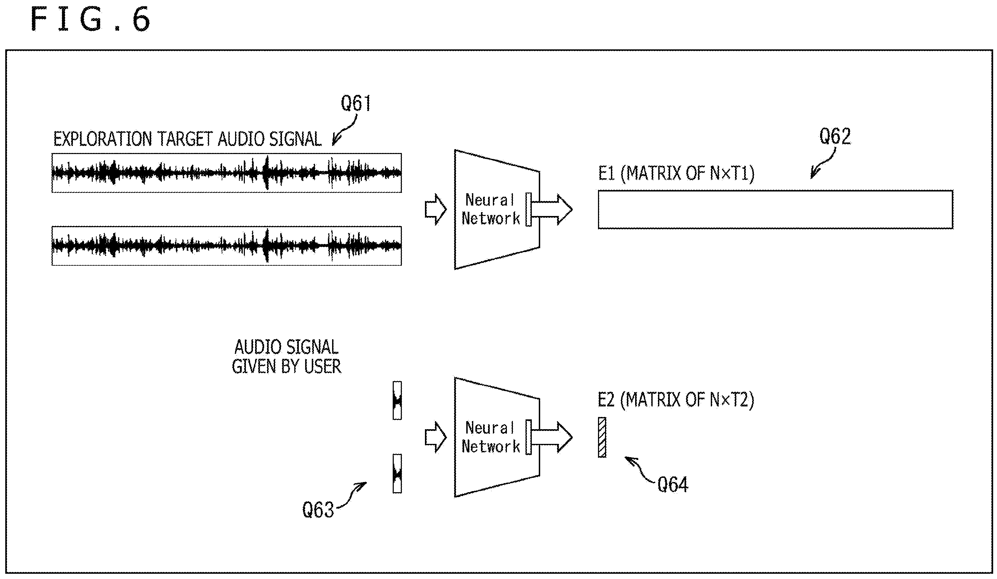

   FIG. 6 is a diagram for explaining calculation of a degree of coincidence with respect to user input data.
[FIG. 7]

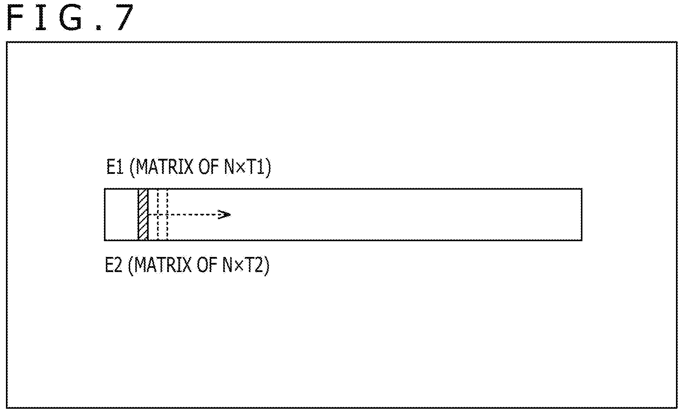

   FIG. 7 is a diagram for explaining calculation of the degree of coincidence with respect to user input data.
[FIG. 8]

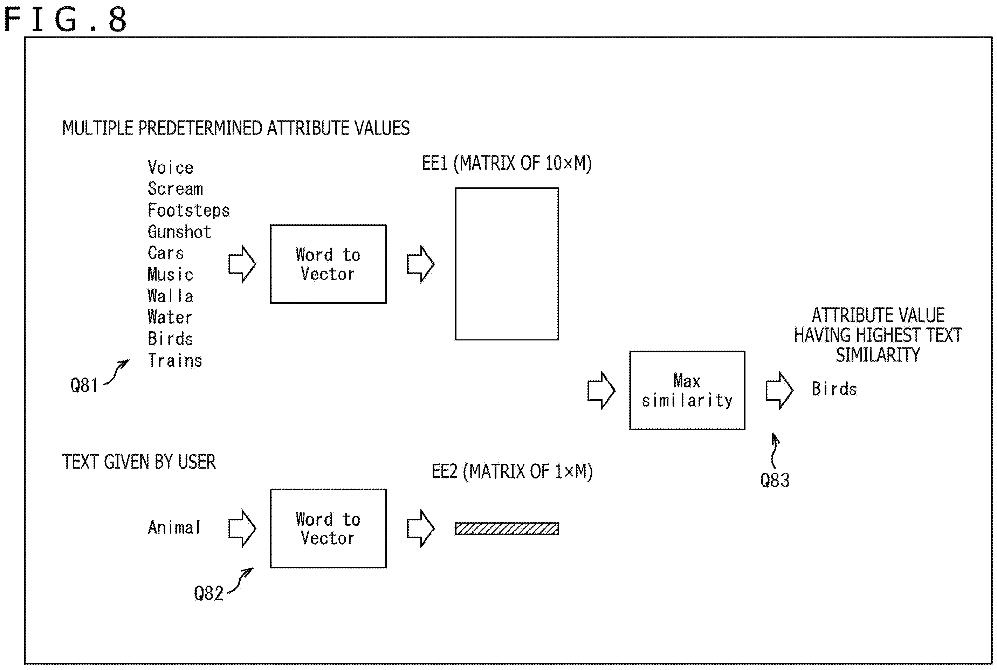

   FIG. 8 is a diagram for explaining calculation of the degree of coincidence with respect to user input data.
[FIG. 9]

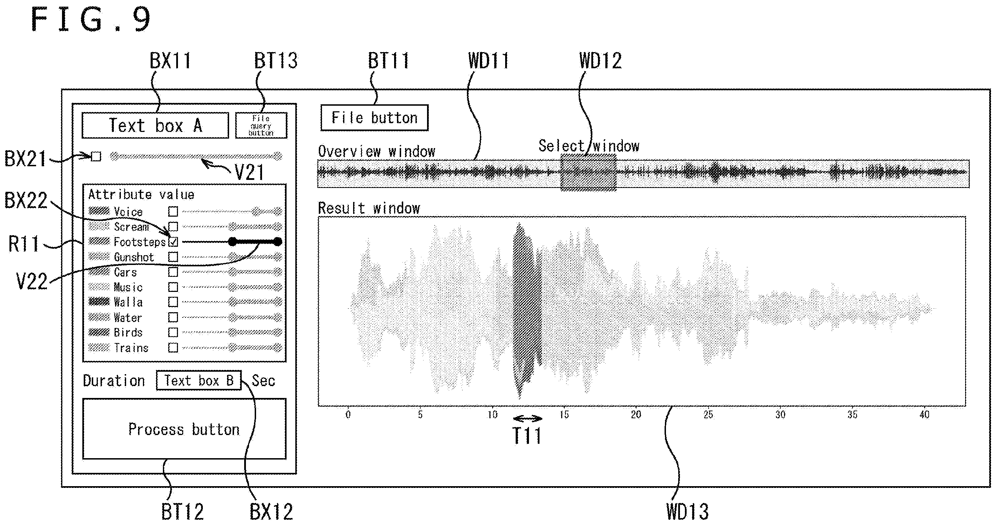

   FIG. 9 is a diagram depicting another display example of the exploration screen.
[FIG. 10]

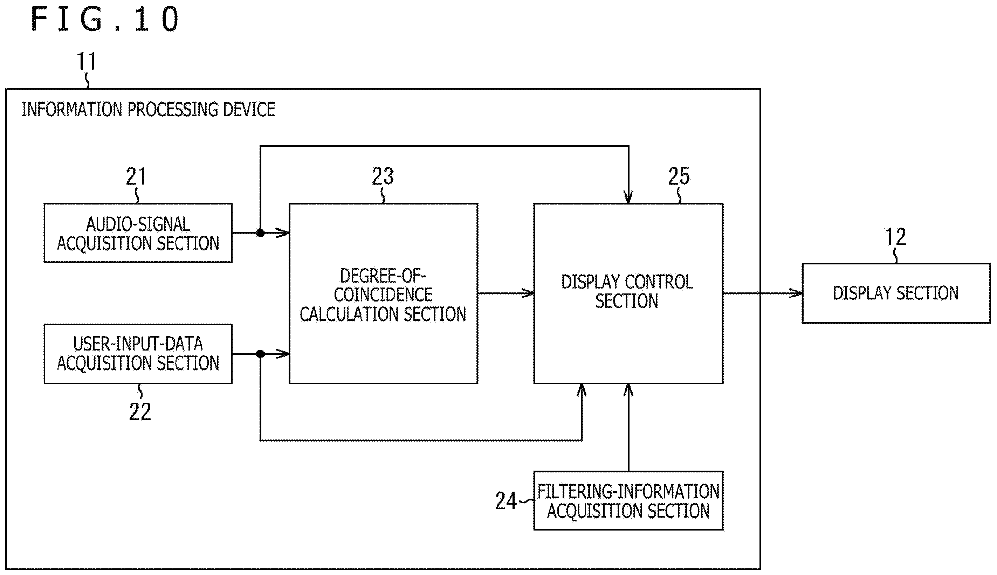

   FIG. 10 is a diagram depicting a configuration example of an information processing device.
[FIG. 11]

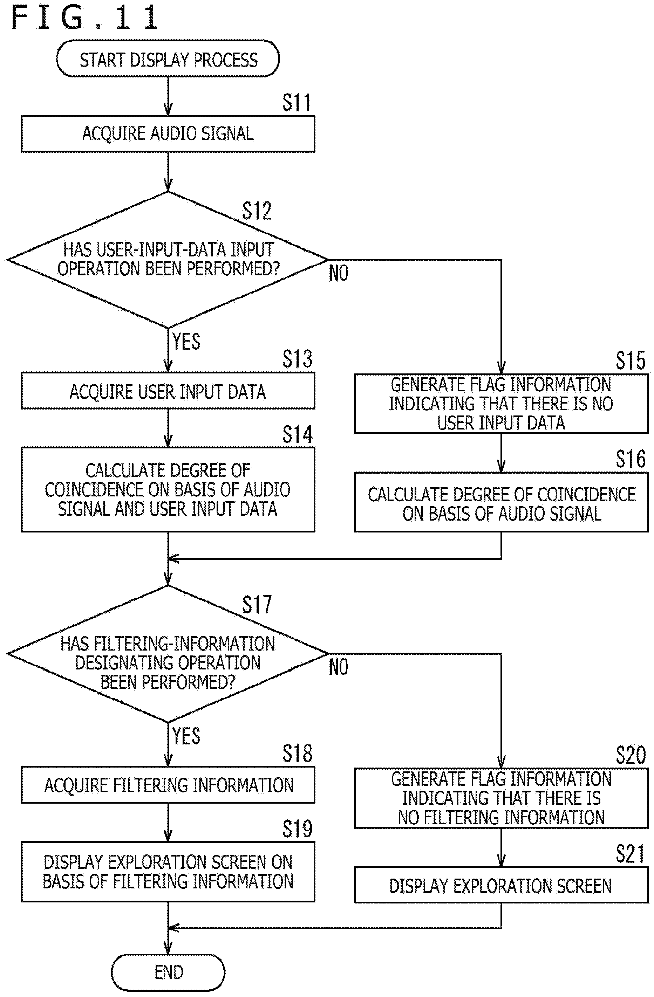

   FIG. 11 is a flowchart for explaining a display process.
[FIG. 12]

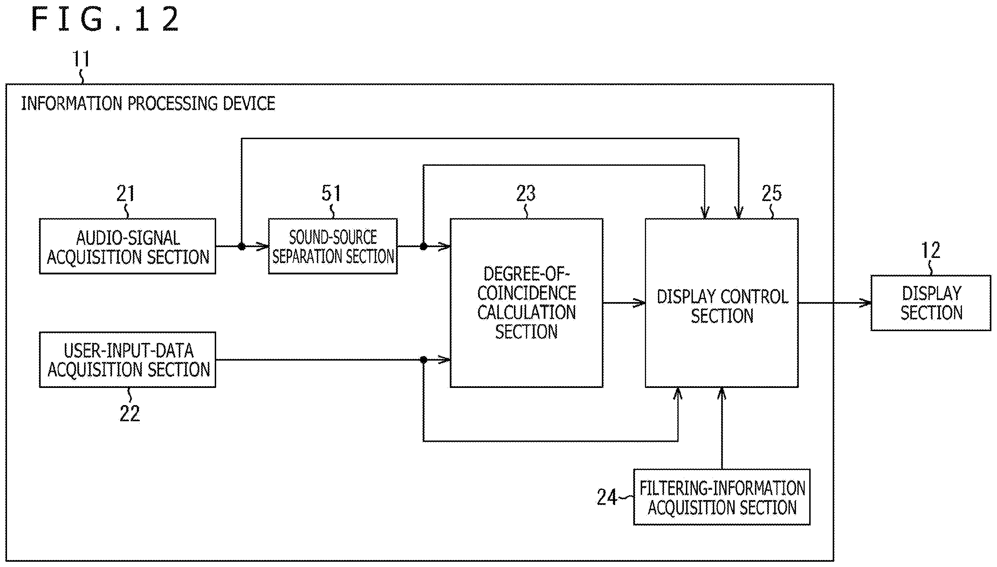

   FIG. 12 is a diagram depicting another configuration example of the information processing device.
[FIG. 13]

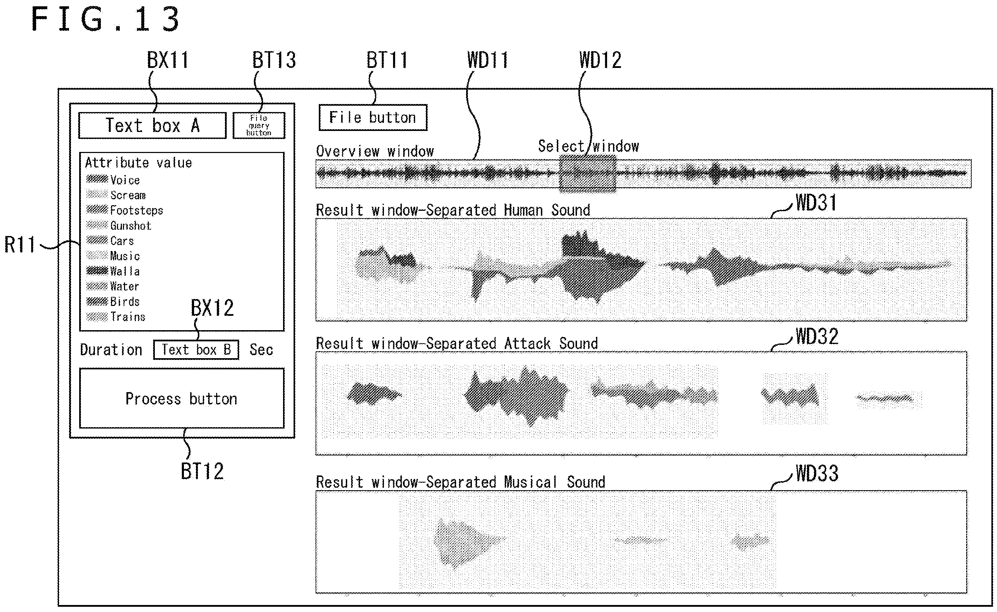

   FIG. 13 is a diagram depicting another display example of the exploration screen.
[FIG. 14]

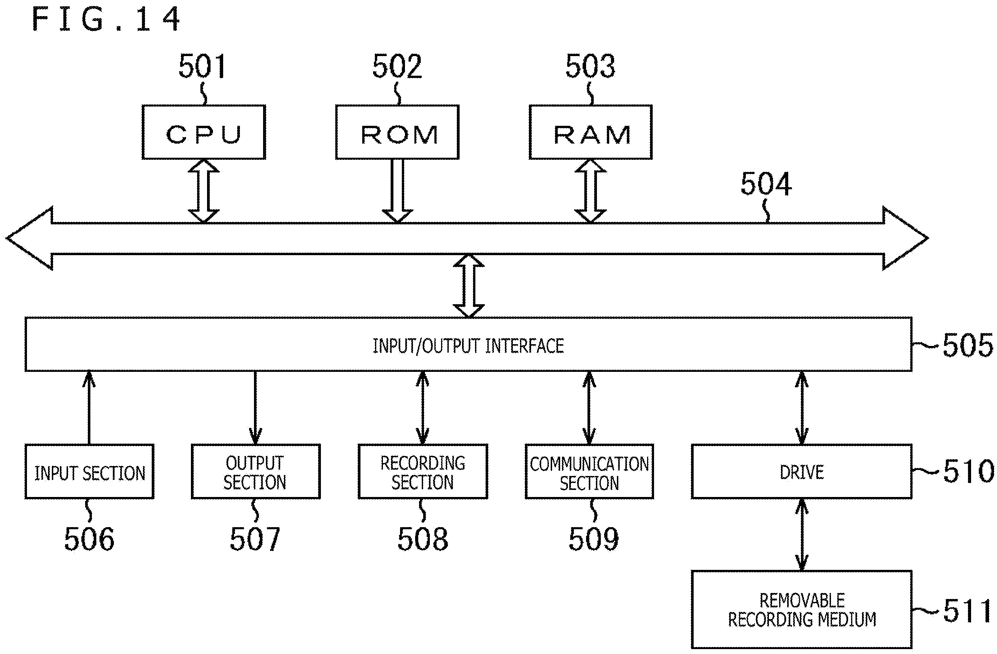

   FIG. 14 is a diagram depicting a configuration example of a computer.

### [Modes for Carrying Out the Invention]

Hereinafter, embodiments to which the present technology is applied will be explained with reference to the drawings.

### <First Embodiment>

### <Present Technology>

According to the present technology, a feature included in any input signal such as an audio signal, a video signal, or a sensor signal obtained by sensing using a sensor such as a ranging sensor is converted into a visual feature to be displayed, so that a work of conducting an exploration or the like can be visually performed. With the present technology, the work cost of conducting an exploration or the like can be reduced.

As a specific example, a case where an input signal is an audio signal will be explained below. In such a case, a sound feature is converted into a visual feature to be displayed, so that the work of exploring for a desired sound, which has been conducted through a trial-listening confirmation, can also be performed through a visual confirmation. Accordingly, the work cost of conducting an exploration can be reduced.

As explained above, under the circumstances, an exploration for a time section of a desired sound among recorded sounds is conducted by a worker through a trial-listening confirmation. Such a trial-listening confirmation is a factor of the increase of the production and management work cost.

Specifically, in the case of movie content, the cost for the following works becomes high, for example.

### (1. (Production) Exploration for Noise Sound Among Sounds Recorded at Shooting Site)

Some unintended noise sounds are recorded at a shooting site in some cases. An unintended noise sound is a noise sound that is against an intention to produce content.

An unintended noise sound varies depending on content. Specific examples of such an unintended noise sound commonly include a wind noise, an air conditioning noise, an animal's voice, and sounds of footsteps and sneezing of a shooting crew.

In production of movie content, an exploration for such a noise sound is conducted through a trial-listening confirmation, and then, various processes such as sound pressure reduction, EQ (Equalizer) adjustment, and waveform replacement are performed in order to make the noise sound inaudible.

### (2. (Production) Exploration for Desired Sound from Sounds Having Undergone Sound Source Separation)

In order to enable more realistic audio reproduction of movie content including 2-ch (2-channel) audio signals, for example, multi-channeling to 5.1 ch, 7.1 ch, etc. is performed on the original 2-ch audio signals.

There have been various multi-channeling methods. For example, a sound source separation technology is used during multi-channeling to separate audio signals of a predetermined sound source type from audio signals of multiple mixed sound sources. Then, on the basis of a purpose of producing the content, a content producer rearranges the separated audio signals in multiple channels.

In a specific example, a "human voice," a "sudden sound," and a "music sound" are defined as types of sound sources (sound source types) predetermined in sound source separation.

In such a case, if sound source separation is performed on 2-ch audio signals of the existing move content, audio signals separated as the sound source type "human voice" include a human conversation voice, a human scream, a human cheering voice, and the like.

In addition, audio signals separated as the sound source type "sudden sound" include a sound of explosion, a sound of a gunshot, a sound of footsteps, a sound of closing/opening a door, and the like. Audio signals separated as the sound source type "music sound" include a BGM (Back-Ground Music), a sound of a musical performance in a play, and the like.

After such sound source separation, a work of rearranging the separated audio signals in multiple channels is performed on the basis of the purpose of producing the content. During this work, an exploration to determine which time section of each separated audio signal includes a desired sound needs to be performed through a trial-listening confirmation.

### (3. (Management) Exploration for Music Part)

In production of a promotion trailer for movie content, portions of a plurality of time sections are extracted from the movie content to be combined together.

In this case, portions, of the movie content, including music sounds are usually not extracted due to the following reasons:
·When portions of a plurality of time sections are extracted and combined together, music sounds in the combined portions are not naturally connected.
·A dissonant sound is likely to be generated if a music sound for the promotion trailer and a music sound included in the movie content are simultaneously heard (reproduced) .

In order to prevent the music sounds from being unnaturally connected or prevent generation of a dissonant sound, a person who produces the promotion trailer for the movie content needs to recognize which portion of the movie content includes a music sound, by making a trial-listening confirmation.

Thus, since the work cost of exploring for a time section of a desired sound through a trial-listening confirmation is high, an enormous amount of time is required to produce and manage content.

Therefore, in the present technology, a sound feature is converted into a visual feature to be displayed, so that the work which has been performed through a trial-listening confirmation can also be performed through a visual confirmation. Accordingly, the cost of exploring for a desired sound can be reduced, and a time to produce and manage content can be shortened.

The present technology will be explained in accordance with the following item order.
1. System of Converting Sound Feature to Visual Feature and Displaying Visual Feature
   1-1. System of Displaying Degrees of Coincidence by Using Colors Corresponding to Attribute Values Regarding Each Predetermined Sound Attribute
   1-1-1. Automatic Calculation of Degree of Coincidence
   1-1-2. Degree of Coincidence to be Displayed
   1-1-2-1. Method of Performing Display at Fixed Time Interval
   1-1-2-2. Method of Performing Display at Variable Time Interval
   1-1-2-3. Method of Displaying Process Result Obtained by Low-pass Filter
   1-2. System of Displaying Degree of Coincidence With Respect to Data Given by User, by Using Color
   1-2-1. Case Where Data Given by User Is Audio Signal
   1-2-2. System of Displaying Degree of Coincidence with Respect to Text Given by User, by Using Color
   1-2-3. System of Displaying Degree of Coincidence with Respect to Image or Video Signal Given by User, by Using Color
**2.** System Having Filtering Function

### (1. System of Converting Sound Feature to Visual Feature and Displaying Visual Feature)

### (1-1. System of Displaying Degrees of Coincidence by Using Colors Corresponding to Attribute Values Regarding Each Predetermined Sound Attribute)

According to one system to which the present technology is applied, regarding each predetermined sound attribute, that is, regarding an attribute concerning an audio signal (input signal), the degrees of coincidence are displayed by using colors corresponding to attribute values of the attribute. Accordingly, the work which has been performed through a trial-listening confirmation can also be performed by a visual confirmation, so that the work cost of exploring for a desired sound can be reduced.

As a specific example, a case where a predetermined attribute is a "sound source type" will be explained.

The attribute "sound source type" is used to classify the types of sound sources. Here, the attribute values of this attribute include words, such as a "human voice," a "scream," a "sound of footsteps," a "sound of a gunshot," a "sound of a traveling vehicle," and a "music sound," which express the types of sound sources, that is, include text information indicating sound source types.

According to the present technology, the degree of coincidence between an exploration target audio signal for a desired sound and each of attribute values of each attribute is automatically calculated, and the calculation result of the degree of coincidence with respect to each of the attribute values is displayed by using colors.

In other words, a sound feature which is the degree of coincidence between an exploration target audio signal and each of the attribute values of each attribute is converted into a visual feature which is a color that is set for each of the attribute values, to be displayed.

By software (hereinafter, referred to as an exploration tool) to which the present technology having the above system is applied, an exploration screen depicted in FIG. 1, for example, that is, a GUI (Graphical User Interface) is displayed on a display screen of a display or the like.

In this example, by operating a file button BT11 disposed on the exploration screen, a user can select (designate) to read an exploration target file, that is, a file including a desired exploration target audio signal.

After the exploration target file is selected, a time waveform of an audio signal included in the file is displayed in an overview window WD11. Particularly, the entirety (all sections) of the audio time waveform from a start time to an end time of the audio signal is displayed in the overview window WD11.

In addition, a select window WD12 for selecting (designating) a desired time section is also displayed in the overview window WD11.

The time section, of the time waveform displayed in the overview window WD11, designated by the select window WD12, that is, a section (time section) surrounded by the select window WD12, is displayed in an enlarged manner in a result window WD13.

It is to be noted that, in the figure, a lateral direction and a vertical direction in each of the overview window WD11 and the result window WD13 indicate a time direction and an amplitude, respectively.

The user can move the position of the select window WD12 in the overview window WD11 and can freely set a lateral width of the select window WD12 in the figure, that is, a length of the time section.

When the user designates the position and the width of the select window WD12 in this manner, a time section, of the entire time waveform of the exploration target audio displayed in the overview window WD11, to be displayed in an enlarged manner in the result window WD13 is designated.

Then, only a portion corresponding to the time section, of the entire time waveform of the exploration target audio, selected by the select window WD12 is displayed in an enlarged manner in the result window WD13.

In the exploration tool of the present technology, display regarding a color that is a visual feature of an exploration target audio signal is performed in the result window WD13, although the details of this display will be explained later.

In addition, a list of attribute values of the attribute "sound source type" is displayed in an attribute-value display region R11 in such a way that the attribute values and colors (color information) representing the corresponding attribute values are associated with each other.

In a part indicated by an arrow Q11, for example, in the attribute-value display region R11, a text "Voice," that is, text information which indicates one attribute value "human voice" of the attribute "sound source type," and a blue color, or more specifically, a blue rectangular mark indicating the attribute value "human voice," are displayed in association with each other.

When viewing the list of the text information and the color information about the attribute values displayed in the attribute-value display region R11, the user can instantly recognize the attribute values of the attribute "sound source type" and the colors corresponding to the attribute values. Here, the correspondence between the text information and the color information about the attribute values may be set, as appropriate, by the user or may be automatically set in a system (exploration tool). This similarly applies to the number of attribute values displayed in the attribute-value display region R11.

A process button BT12 is operated to give an instruction to perform, in the result window WD13, color-related display which is a visual feature corresponding to the sound feature of the exploration target audio signal.

In addition, a text box BX11 is a region where the user inputs text information corresponding to an attribute value. A text box BX12 is a region where the user inputs a time interval (time length) for performing color-related display which is a visual feature. Moreover, a query button BT13 is operated by the user to designate (input) user input data which is used to calculate the degree of coincidence of an exploration target audio signal.

It is to be noted that the detailed explanation of the text box BX11, the text box BX12, and the query button BT13 will be given later.

It is assumed that, on the exploration screen explained so far, the user operates the file button BT11 to designate an exploration target file (audio signal), and then, sets a position and a width as the display position and the width of the select window WD12.

If the user subsequently operates the process button BT12, the exploration tool automatically calculates the degree of coincidence between the exploration target audio signal and each of the attribute values of the attribute "sound source type" displayed in the attribute-value display region R11, and reflects the calculation result in the display in the result window WD13.

As a result, the display on the exploration screen depicted in FIG. 1 is changed to that depicted in FIG. 2, for example. It is to be noted that a part in FIG. 2 corresponding to that in FIG. 1 is denoted by the same reference symbol, and an explanation thereof will be omitted as appropriate.

On the exploration screen depicted in FIG. 2, only the display in the result window WD13 is changed from that in FIG. 1.

That is, the degrees of coincidence, in each time (timing), with respect to the respective attribute values are displayed in the result window WD13 depicted in FIG. 2 such that the degrees of coincidence are reflected on the original time waveform by using colors.

In other words, a feature of an audio signal which is the degree of coincidence with respect to an attribute value, is converted into a visual feature which is a color, or more specifically, to a color region that is set for the corresponding attribute value and that has a size (width) corresponding to the degree of coincidence, and the visual feature is displayed together with the time waveform of the exploration target audio signal.

For example, at a timing indicated by an arrow Q21, the time waveform of the exploration target audio is displayed by using two colors: a "blue" color which represents the attribute value "human voice" (Voice) of the attribute "sound source type"; and a "cyan blue" color which represents the attribute value "scream" (Scream) of the attribute "sound source type."

This means that the portion, of the exploration target audio (audio signal), at the timing indicated by the arrow Q21 includes two types of sounds which are a sound of the sound source type classified as the attribute value "human voice" and a sound of the sound source type classified as the attribute value "scream."

In addition, at the timing indicated by the arrow Q21, the width (the longitudinal length in the figure) of the upper portion of the time waveform of the exploration target audio, that is, the portion displayed in cyan blue, is greater than the width of the lower portion of the time waveform, that is, the portion displayed in blue.

For example, the width in the longitudinal direction (amplitude direction) of a portion, in the time waveform, displayed in a color representing a certain attribute value indicates the magnitude of the degree of coincidence with respect to the attribute value.

That is, it can be interpreted that the greater width (width ratio), in the amplitude direction, of a portion having a color representing an attribute value with respect to the width, in the amplitude direction, of the time waveform indicates that there is a higher possibility that a sound of the type indicated by the attribute value is included in the exploration target audio signal. In other words, it can be interpreted that the greater the width in the amplitude direction of a portion having a color representing an attribute value, the more features related to the attribute value the exploration target audio signal has.

For example, it can be seen that, at the timing indicated by the arrow Q21, the degree of coincidence with respect to the attribute value "scream" is higher than that with respect to the attribute value "human voice." Therefore, it can be seen that, at the timing indicated by the arrow Q21, the possibility that a "scream" is included is higher although both the "scream" and the "human voice" are included.

By such a display system, not only the time waveform of an exploration target audio signal is displayed, but also the respective types of sounds included in the audio signal at each timing (time section) and the ratio (the magnitude of the degree of coincidence) of sounds of the respective types are displayed in the result window WD13.

Therefore, not only a waveform-related feature, such as a volume or a stationary level, of an exploration target audio signal but also the type, such as a "human voice" or a "scream," of a sound included in the exploration target audio signal can be visually confirmed (recognized) by the user.

Consequently, with the exploration tool according to the present technology, an exploration for a desired sound, which has been performed through a trial-listening confirmation only, can be performed in a more efficient manner. Accordingly, the work cost of exploring for a desired sound can be reduced, and production and management of content can be performed at low cost.

It is to be noted that the display in the result window WD13 is not limited to that in the example depicted in FIG. 2, and any other display can be adopted therefor. For example, color display of the time waveform of an exploration target audio signal may be performed for each attribute value in the result window WD13. In such a case, in the time waveform regarding the attribute value "human voice," for example, a time section where the degree of coincidence with respect to the attribute value "human voice" is higher than a prescribed value (e.g., 0) is displayed in blue which indicates the attribute value "human voice." Here, a portion having a width, in the amplitude direction, corresponding to the degree of coincidence may be displayed in blue, or the degree of coincidence may be expressed by a numerical value.

### (1-1-1. Automatic Calculation of Degree of Coincidence)

Next, a technology for performing display which is performed in the result window WD13 will be explained. First, calculation of the degree of coincidence between an exploration target audio signal and an attribute value will be explained.

For example, a neural network is used to implement automatic calculation of the degree of coincidence.

First, for each predetermined attribute value, a large quantity of audio signals including sounds of a sound source type indicated by the attribute value is prepared, and the audio signals and labels (text information) that indicate which attribute values the corresponding audio signals have, are held.

Next, a neural network that receives an audio signal as an input and outputs a label corresponding to the audio signal is generated by learning or the like, as depicted in FIG. 3, for example.

In this example, 2-ch audio signals are inputted to the neural network, as indicated by an arrow Q31, and labels indicating the respective attribute values and respective temporal existence probabilities of the attribute value signals are obtained as outputs from the neural network in response to the input, as indicated by an arrow Q32.

That is, the part indicated by the arrow Q31 indicates the time waveforms of 2-ch audio signals, which are L and R, included in an exploration target file designated by the user, and the 2-ch audio signals are inputted as exploration target audio signals to the neural network. In particular, the entirety, that is, all the time sections of each of the exploration target audio signals, are inputted to the neural network.

It is to be noted that the number of channels of audio signals to be inputted to the neural network is not limited to two, and any number of channels may be adopted.

In addition, a label "Voice" that indicates the attribute value "human voice" of the attribute "sound source type" and the existence probability of the attribute value "human voice" in each time section of the inputted audio signal are indicated in association with each other on the top, in FIG. 3, of the part indicated by the arrow Q32, for example.

The existence probability of the attribute value "human voice" represents the probability that a signal corresponding to the attribute value "human voice," that is, a signal of a sound having the attribute value "human voice" as the sound source type is included (exists) in each time section of the audio signal inputted to the neural network.

In particular, in the neural network, the existence probability is obtained for each fixed time interval (time section) of 50 milliseconds, for example, and is outputted.

Such a neural network is previously generated, so that, in response to an exploration target audio signal which is an input, the labels indicating the respective predetermined attribute values and the respective existence probabilities of the labels (attribute values) for each fixed time interval can be obtained as outputs.

Then, the existence probability of each of the attribute values obtained as an output from the neural network can be adopted as the degree of coincidence between the attribute value and the exploration target audio signal.

Accordingly, the degree of coincidence between the exploration target audio signal and each of the attribute values of the attribute "sound source type" can be obtained through computation using the neural network.

In this case, the degree of coincidence between an exploration target audio signal and an attribute value can be regarded as the degree of a probability that the exploration target audio signal includes a sound of the sound source type indicated by the attribute value, that is, the degree of coincidence between the exploration target audio signal and a signal of a sound of the sound source type indicated by the attribute value. Therefore, the degree of coincidence can be considered to represent a sound-related feature which is the sound type of an exploration target audio signal.

It is to be noted that the degree of coincidence between an exploration target audio signal and an attribute value is not necessarily expressed by the existence probability of the attribute value itself and may be calculated on the basis of the existence probability of the attribute value.

### (1-1-2. Degree of Coincidence to be Displayed)

Although the degree of coincidence of a fixed time interval can be calculated for each of the attribute values by the aforementioned method, it is preferable to decide the degree of coincidence to be displayed by taking the visibility for a user who conducts an exploration into consideration.

The reason for this is as follows. For example, the output time interval of the neural network in the above example is 50 milliseconds. Thus, if the outputted degrees of coincidence at an interval of 50 milliseconds are displayed, the displayed colors on the time waveform may vary at close intervals in the time direction.

In this case, the visibility to recognize the timing and the sound source type (attribute value) of a sound on the time waveform displayed in the result window WD13 is deteriorated.

Therefore, a technology for improving the visibility of the time waveform in the result window WD13 will be specifically explained below.

### (1-1-2-1. Method of Performing Display at Fixed Time Interval)

First, a method of setting, as a time interval at which the value of the degree of coincidence varies, a fixed time interval longer than the output time interval (50 milliseconds) of the neural network, will be explained.

In this case, a representative value of the output values of the neural network during each fixed time interval can be adopted as the degree of coincidence for each fixed time interval displayed in the result window WD13.

Specifically, either an average value or a maximum value described below can be adopted as the representative value.
·The average value of the output values (existence probabilities) of the neural network during each fixed time interval
·The maximum value of the output values (existence probabilities) of the neural network during each fixed time interval

The fixed time interval may have a time length (e.g., 5 seconds) that is fixedly decided by the exploration tool, or may be a desired numerical value (time length) that the user inputs into the text box BX12 disposed on the exploration screen of the exploration tool.

For example, in a case where the user can set the fixed time interval of displaying the degree of coincidence by inputting a numerical value into the text box BX12, the degrees of coincidence each having a time interval width adaptable to the user, or more specifically, colors for respective attribute values corresponding to the degrees of coincidence can be displayed.

Alternatively, a value obtained by dividing, by a prescribed value (e.g., 20), the time length of a part, of the entire time waveform of the exploration target audio signal, displayed in the result window WD13, may be set as the aforementioned fixed time interval, for example.

Specifically, in a case where the length of the time waveform displayed in the result window WD13 is 40 seconds, for example, the fixed time interval is 2 seconds (= 40/20). The display in the result window WD13 depicted in FIG. 2 indicates the example of the case where the fixed time interval is 2 seconds.

As a result of this, the frequency of variation, in the time direction, of displayed colors on the time waveform can be fixed according to the length of the time waveform displayed in the result window WD13, so that the visibility of the result window WD13 can be improved.

It is to be noted that the above prescribed value "20" for obtaining the fixed time interval may be fixedly decided by the exploration tool or may be changed according to user setting.

### (1-1-2-2. Method of Performing Display at Variable Time Interval)

For example, it is assumed that the exploration target audio signal is an audio signal of video content, and a video signal of the video content also can be used by the exploration tool.

In such a case, shot switching detection (Shot Detection) in the video signal, that is, detection of a shot switching in a video based on the video signal can be used.

For example, in the shot switching detection, a timing of switching a shot (screen), that is, a timing when a semantic switching is generated in the video signal is detected on the basis of a difference between temporally adjacent frames of the video signal or the like.

Specifically, for example, shot switching detection is performed on the video signal, so that a timing when a shot is switched in the video content, that is, a time position of a shot switching is detected. Then, a section (time section) between adjacent time positions obtained as the detection result is set as a time section (hereinafter, also referred to as a display time section) in which one degree of coincidence is displayed.

Since a start position and an end position of the display time section are timings (positions) of shot switching detected through the shot switching detection, lengths of all the display time sections included in the time waveform in the result window WD13 are not necessarily equal to one another. That is, the time interval of the display time sections has a variable length (variable time section).

After the display time sections are determined (set) in the aforementioned manner, the degree of coincidence with respect to each attribute value is obtained in each of the display time sections.

For example, to calculate the degree of coincidence with respect to the attribute value "human voice" for each of the display time sections, the entirety of the exploration target audio signal is inputted to the aforementioned neural network to execute computation.

As a result, as an output from the neural network, an output value (existence probability) representing the degree of coincidence with respect to the attribute value "human voice" is obtained for each of time sections having a fixed time length of 50 milliseconds, for example. Then, the representative value such as the average value or the maximum value of the degrees of coincidence (existence probabilities) in the multiple time sections included in one display time section is obtained. The representative value is set as the degree of coincidence with respect to the attribute value "human voice" in the display time section.

After the degrees of coincidence with respect to the respective attribute values are obtained for each display time section, the time waveform in the result window WD13 is displayed on the basis of the degrees of coincidence with respect to the respective attribute values for each display time section, by using colors corresponding to the degrees of coincidence with respect to the respective attribute values in a manner similar to that in the example depicted in FIG. 2, for example.

In this case, the time position (timing) of color display switching corresponding to the degrees of coincidence agrees with a switching position between the display time sections. Therefore, at the time position, a sematic switching in a video signal detected through shot switching detection is generated. Consequently, the user can also instantaneously recognize a sematic switching position in the video signal by viewing the time waveform in the result window WD13.

When a display time section is obtained on the basis of a video signal and a time waveform is displayed in the result window WD13 in the aforementioned manner, a sematic switching in the video signal and the degrees of coincidence can be displayed. Accordingly, an exploration for a desired sound can be conducted in a more efficient manner.

### (1-1-2-3. Method of Displaying Process Result Obtained by Low-pass Filter)

In order to prevent frequent-interval variation, in the time direction, of the degrees of coincidence displayed in the result window WD13, that is, the degrees of coincidence with respect to each attribute value for use in color display of the time waveform, a low-pass filter may be simply applied to output values from the neural network.

For example, it is assumed that the final degree of coincidence, which is used for color display of the time waveform in the result window WD13, with respect to a prescribed attribute value is obtained for each time section.

In this case, when an exploration target audio signal is inputted to the aforementioned neural network, the existence probabilities, that is, the degrees of coincidence with respect to respective attribute values are obtained as output values for each time section having a fixed length of 50 milliseconds, for example.

Moreover, filtering using a low-pass filter is performed on the degrees of coincidence obtained for multiple time sections with respect to the prescribed attribute value. The filtering result is the final degree of coincidence with respect to the prescribed attribute value for each of the time sections.

It is to be noted that properties of the low-pass filter such as the number of taps and coefficients of the respective taps may be fixedly decided in the exploration tool or may be changed according to user setting.

In addition, the properties of the low-pass filter may be decided on the basis of the time length of the part, of the exploration target audio signal, displayed in the result window WD13, as in the case of "1-1-2-1. Method of Performing Display at Fixed Time Interval."

The systems for displaying the degrees of coincidence with respect to respective attribute values of each predetermined sound attribute have been explained so far. According to any one of these displaying systems, an exploration for a desired sound can be conducted through a visual confirmation in addition to a trial-listening confirmation, so that the work cost of conducting the exploration can be reduced.

It is to be noted that the attributes and attribute values are not limited to those in the aforementioned examples, and any other attributes and attribute values may be adopted.

For example, examples of the attributes include a "reverberation level" and a "stationary noise level."

The attribute "reverberation level" is for differentiating reverberation levels of sounds. For example, the attribute values thereof are words (text information) such as "none," "low," "medium," and "high," which each indicate the degree of a reverberation level.

The attribute "stationary noise level" is for differentiating magnitudes of stationary noise sounds. For example, the attribute values thereof are words (text information) such as "none," "small," "medium," and "large," which each indicate the degree of the magnitude of a stationary noise sound.

Also, means other than the neural network may be used for automatic calculation of the degree of coincidence. Moreover, the example in which different colors for the attribute values are displayed on the time waveform of an exploration target audio signal has been explained above, but the displaying system is not limited to that using colors, and any other displaying system using characters, numerical values, patterns, or shapes may be adopted as long as the degrees of coincidence can be visually recognized.

### (1-2. System of Displaying Degree of Coincidence With Respect to Data Given by User, by Using Color)

The systems of displaying the degrees of coincidence with respect to the respective attribute values of a predetermined sound attribute by using colors have been described above. However, an exploration for a sound that has not been predetermined cannot be conducted by these systems.

For example, it is generally assumed that, in certain movie content, a sound effect unique to the movie content, such as a sound effect that is generated when a main character injects a thread from his hand, is not predetermined as an attribute value.

Therefore, a system of displaying the degree of coincidence with respect to data given by a user (hereinafter, also referred to as user input data) by using a color in a case where the type of a sound for which an exploration is to be conducted is not predetermined, will be explained below.

With this system, the degree of coincidence can be displayed even for a sound unique to certain content, for example, so that the work cost of conducting an exploration for a desired sound can be reduced.

It is to be noted that there can be some types of user input data, which will be explained later. In any case, the degree of coincidence between user input data and an exploration target audio signal is calculated, and the degree of coincidence is displayed as depicted in FIG. 4, for example. It is to be noted that a part in FIG. 4 corresponding to that in FIG. 1 is denoted by the same reference symbol, and an explanation thereof will be omitted, as appropriate.

In the example depicted in FIG. 4, a portion, of the entire time waveform of an exploration target audio signal, of a time section selected by the select window WD12 is displayed in the result window WD13, as in the case in FIG. 1 or 2.

Further, in the result window WD13 in this example, the time waveform of the exploration target audio is displayed by using a gradation in color corresponding to the degree of coincidence between the exploration target audio signal and the user input data in each time section. That is, the display density of the time waveform of the exploration target audio varies according to the degree of coincidence between the exploration target audio signal and the user input data.

Therefore, in this example, a sound feature which is included in the exploration target audio signal and which is the degree of coincidence with respect to the user input data is converted into a visual feature which is the gradation in color, and the visual feature is displayed.

Thus, since the time waveform of the exploration target audio is displayed by using the display density that is decided according to the degree of coincidence with respect to the user input data, that is, by using a color, an exploration for a desired sound can be conducted through a visual confirmation in addition to a trial-listening confirmation, so that the work cost of conducting the exploration can be reduced.

Hereinafter, methods for calculating the degrees of coincidence will be explained on the basis of the kind (type) of user input data given by a user.

### (1-2-1. Case Where Data Given by User Is Audio Signal)

First, a case where user input data is an audio signal will be explained.

In the present system, in a case where, in prescribed movie content, a user explores for a sound effect unique to the movie content as in the aforementioned example, the user generates one audio file by extracting a time section including only an audio signal of the sound effect.

Then, the user inputs, as user input data, the generated audio file, that is, the audio signal of the sound effect included in the audio file, to the exploration tool. When inputting the user input data, the user can designate (select) desired user input data by operating the query button BT13 on the exploration screen.

The exploration tool calculates, for each time section, which will be explained later, the degree of coincidence between the exploration target audio signal and the audio signal (user input data) included in the inputted audio file.

There are some methods for calculating the degree of coincidence. A case using a neural network will be explained hereinbelow.

With the neural network which has been explained in "1-1-1. Automatic Calculation of Degree of Coincidence," the respective existence probabilities with respect to multiple attribute values are obtained as outputs for each time section, as previously explained with reference to FIG. 3.

In is commonly known that, in a neural network of this type, an output vector from a next-to-last layer of the neural network has a semantic feature of the audio signal inputted to the neural network, as indicated by an arrow Q51 in FIG. 5, for example.

That is, in this example, an output vector that is outputted from the next-to-last layer to the last layer of the neural network has a sematic feature of the exploration target audio signal which is the input. In other words, this output vector indicates a semantic feature quantity of the exploration target audio signal. In the exploration tool, the output vector from the next-to-last layer is used for calculation of the degree of coincidence.

Specifically, first, an exploration target audio signal is inputted to the neural network, as indicated by an arrow Q61 in FIG. 6, and an output vector which is an output from the next-to-last layer of the neural network is obtained.

As the output vector, an N-dimensional vector is obtained for each output time interval (e.g., 50 milliseconds) of the neural network. Thus, an N-dimensions × T1 matrix E1 is obtained for the entire exploration target audio signal, as indicated by an arrow Q62.

Here, in a case where the output time interval of the neural network is 50 milliseconds, T1 = int(T/0.05). It is to be noted that int() represents a function of rounding down decimal places, and T represents the entire time length (seconds) of an inputted audio signal.

Next, an audio signal included in an audio file inputted by the user, that is, user input data is inputted to the neural network, as indicated by an arrow Q63. Then, an output vector which is an output from the next-to-last layer of the neural network is obtained, as in the case for the exploration target audio signal.

Accordingly, an N-dimensions × T2 matrix E2 including an output vector for each output time interval (e.g., 50 milliseconds) is obtained for the entire user input data, as indicated by an arrow Q64. It is to be noted that, in the case where the output time interval of the neural network is 50 milliseconds, T2 = int(T'/0.05) where T' represents the entire time length of the user input data.

Moreover, as depicted in FIG. 7, while, from the head to the end of the matrix E1, the matrix E2 is slid (shifted) by T2 with respect to the matrix E1, the degree of coincidence between the matrix E2 and the corresponding section of the matrix E1 is obtained by calculation of a cosine similarity through a vector expansion of the matrixes.

In FIG. 7, a rectangular that is not hatched and is long in the lateral direction represents the matrix E1, and a rectangular that is hatched and is short in the lateral direction represents the matrix E2.

When the degree of coincidence is calculated, the calculation of the degree of coincidence is conducted on the basis of a portion, of the matrix E1, overlapping the matrix E2, that is, an N × T2 portion included in the N × T1 matrix E1, and the matrix E2, while the position of the matrix E2 is shifted by T2 from the left side to the right side, in FIG. 7, of the matrix E1.

That is, the cosine similarity between a vector including elements of the N × T2 portion of the matrix E1 and a vector including elements of the matrix E2 is obtained.

It is to be noted that the cosine similarity (cosine distance) between vector a = (a₁, a₂, ..., aₙ) and vector b = (b₁, b₂, ..., bₙ) is obtained by the following expression (1).

[Math. 1] $\frac{{a}_{1} {b}_{1} + ⋯ + {a}_{n} {b}_{n}}{\sqrt{{a}_{1}^{2} + ⋯ + {a}_{n}^{2}} \sqrt{{b}_{1}^{2} + ⋯ + {b}_{n}^{2}}}$

Therefore, in this example, the degree of coincidence between the exploration target audio signal and the user input data is obtained for each time section having a length (time interval) that is decided on the basis of the entire length of an audio signal which is the user input data.

### (1-2-2. System of Displaying Degree of Coincidence with Respect to Text Given by User, by Using Color)

Next, a case where the user input data is a text (text information) given by a user will be explained.

In such a case, the user inputs, as the user input data, a text (text information) indicating the type (sound source type) of a sound for which an exploration is to be conducted, into the text box BX11 on the exploration screen of the exploration tool, for example.

As a result, the exploration tool obtains the degree of coincidence between the user input data and the exploration target audio (audio signal), and color display according to the degree of coincidence is performed in the result window WD13.

In this case, the text similarity between the text information inputted as the user input data and each of the attribute values of the attribute "sound source type" which has been explained in "1-1. System of Displaying Degrees of Coincidence by Using Colors Corresponding to Attribute Values Regarding Each Predetermined Sound Attribute," for example, is obtained, so that the degree of coincidence is calculated.

Specifically, text information indicating the attribute values of the attribute "sound source type," that is, the attribute values "human voice," "scream," "sound of footsteps," "sound of gunshot," "sound of traveling vehicle," "music sound," etc., for example, are transformed into vectors as indicated by an arrow Q81 in FIG. 8. In this example, the word "Voice" which is text information indicates the attribute value "human voice," for example.

Here, 10 attribute values are prepared as attribute values of the attribute "sound source type." Therefore, a 10 × M matrix EE1 is obtained by a transformation process on the attribute values of the attribute "sound source type." It is to be noted that M represents the number of dimensions of a vector transformed from the text information.

In the similar manner, a vector transformation process is performed on text information "Animal" which is user input data, as indicated by an arrow Q82, so that a 1 × M matrix EE2 is obtained. FIG. 8 depicts an example in which the user inputs text information "Animal," which indicates animals, into the text box BX11.

In addition, in the exploration tool, a text similarity between text information which is an attribute value and text information which is the user input data is calculated, for each of the multiple attribute values of the attribute "sound source type," by using a cosine similarity on the basis of the obtained matrix EE1 and matrix EE2.

Then, among the multiple attribute values, an attribute value (hereinafter, also referred to as a similarity attribute value) having the highest similarity with respect to the user input data is selected, as indicated by an arrow Q83.

In this example, an attribute value which indicates a voice of a bird and which is indicated by text information "Birds" is selected as an attribute value (similarity attribute value) having the highest text similarity with respect to the user input data "Animal."

In the exploration tool, existence probabilities are obtained for each of the attribute values of the attribute "sound source type" on the basis of the exploration target audio signal, by means of the neural network which has been previously explained in "1-1-1. Automatic Calculation of Degree of Coincidence."

Then, among the existence probabilities for the respective attribute values, the existence probability for the attribute value selected as the similarity attribute value is set as the degree of coincidence between the exploration target audio signal and the user input data. On the basis of the degree of coincidence, color display similar to that in the example depicted in FIG. 4, that is, display of the time waveform using a gradation in color is performed.

The degree of coincidence with respect to the user input data is obtained in the manner explained so far. Accordingly, even in a case where a text (text information) which is user input data given by the user is not included in predetermined attribute values, the user can explore a desired sound.

It is to be noted that the aforementioned text similarity can be obtained by, for example, transforming texts into vectors by a technology such as Word2Vec and by calculating the cosine similarity between two vectors.

Regarding Word2Vec, the detailed explanation is given by "Tomas Mikolov, Kai Chen, Greg Corrado, Jeffrey Dean, "Efficient Estimation of Word Representations in Vector Space," arXiv, https://arxiv.org/abs/1301.3781," for example.

### (1-2-3. System of Displaying Degree of Coincidence with Respect to Image or Video Signal Given by User, by Using Color)

There is a case where an exploration target audio signal is an audio signal of video content, and a video signal can also be used by the exploration tool. In such a case, the degree of coincidence with respect to an image given by a user, that is, an image signal (still-image signal) of a still image or a video signal, that is, an image signal of a moving image (video) can be considered.

Specifically, an audio signal in the method which has been explained in "1-2-1. Case Where Data Given by User Is Audio Signal" can be replaced with a still-image signal or a video signal.

For example, the user designates (inputs) a still-image signal or a video signal as desired user input data by operating the query button BT13 on the exploration screen. The video signal inputted as the user input data may be a portion of a video signal of video content.

In this example, when the user inputs, as the user input data, a signal of a still image or a video including, as a subject, the sound source of a sound for which an exploration is to be conducted, for example, color display of a sound the sound source type or the like of which is unclear or a sound for which an audio signal cannot be prepared can be performed.

In the exploration tool, a process similar to that in the case which has been explained with reference to FIGS. 6 and 7 is performed to calculate the degree of coincidence between the user input data and a video signal of video content corresponding to the exploration target audio signal. That is, the cosine similarity is obtained on the basis of the matrix E1 obtained from the video signal of the video content and the matrix E2 obtained from the user input data, so that the degree of coincidence can be calculated.

Then, the calculated degree of coincidence is adopted as the degree of coincidence between the exploration target audio signal and the user input data, and color display similar to that in the example depicted in FIG. 4, that is, display of a time waveform using a gradation in color is performed.

It is to be noted that, in this case, the neural network for obtaining the matrix E1 and the matrix E2 is configured to receive, as an input, a still-image signal or a video signal, for example, and to output labels indicating respective attribute values and existence probabilities of signals corresponding to the respective attribute values in each timing (time section) of the inputted still-image signal or video signal. Here, a signal corresponding to an attribute value refers to a signal in which a subject (sound source) emitting a sound of a sound source type indicated by the attribute value is included, for example.

The system of displaying the degree of coincidence with respect to data given by a user (user input data) by using a color has been explained above. With this display system, an exploration for a desired sound can be conducted through visual confirmation in addition to a trial-listening confirmation, so that the work cost of conducting the exploration can be reduced.

It is to be noted that the degree of coincidence may be calculated and displayed by using any combination of an audio signal, text information, a still-image signal, and a video signal. For example, the degree of coincidence with respect to an audio signal as user input data and the degree of coincidence with respect to a video signal as user input data may be calculated, and the final degree of coincidence may be obtained from these degrees of coincidence.

In addition, the means for automatically calculating the degree of coincidence with respect to an exploration target audio signal is not limited to means using the aforementioned neural network, and any other means can be used therefor.

In "1-2-2. System of Displaying Degree of Coincidence With Respect to Text Given by User, By Using Color," the text similarity is obtained as explained with reference to FIG. 8, and an existence probability that is obtained by the neural network, which has been explained in "1-1-1. Automatic Calculation of Degree of Coincidence," where text similarities are obtained and an attribute value having the highest text similarity is obtained, is adopted as the degree of coincidence. However, the degree of coincidence may be obtained by any other system as long as the system is similar to the aforementioned method.

Furthermore, the example in which the degree of coincidence with respect to data (user input data) given by the user is displayed, on the waveform of the exploration target audio signal, by using a gradation in color is described. However, the display system is not limited to the display system using colors, and any other system can be used as long as the degree of coincidence can be visually recognized.

In addition, although the system of giving user input data in a file through the query button BT13 has been explained, a time section of an audio signal may be selected by the exploration tool, so that a signal of the selected time section is given as user input data.

### (2. System Having Filtering Function)

The system of converting a sound feature into a visual feature and displaying the visual feature has been explained above. In addition, a filtering function for highlighting only a portion based on a degree-of-coincidence range designated by a user on the basis of the range, or extracting an audio signal corresponding to the portion and saving the audio signal as an audio file, may be provided.

In such a case, a screen depicted in FIG. 9 is displayed as the exploration screen of the exploration tool, for example. It is to be noted that a part in FIG. 9 corresponding to that in FIG. 1 is denoted by the same reference symbol, and an explanation thereof will be omitted, as appropriate.

In FIG. 9, a check box BX21 for designating whether or not to enable the filtering function for user input data is disposed on the lower side of the text box BX11. In addition, a range designating bar V21 for designating the range (hereinafter, also referred to as a designation range) of the degree of coincidence to be displayed for the user input data is disposed on the right side, in the figure, of the check box BX21.

Also, check boxes and range designating bars for the filtering function for respective attribute values are disposed on the right side, in the figure, of text information about the corresponding attribute values in the attribute-value display region R11.

For example, a check mark is displayed only in a check box BX22 that is disposed for the attribute value "sound of footsteps" (Footsteps), in this example. Filtering is performed for the attribute value "sound of footsteps."

In this case, the user designates the designation range of the attribute value "sound of footsteps" to 0.5 to 1.0, for example, by operating the range designating bar V22 disposed on the right side of the check box BX22 in the figure.

In a case where the filtering function is used, when the degree of coincidence between user input data or an attribute value designated by a check box and an exploration target audio signal does not fall within the designation range, any portion of the time waveform in the result window WD13 is not highlighted. In this case, for example, the entire time waveform in the result window WD13 is displayed in a semitransparent color. That is, display is performed such that it can be recognized that there is no time section that satisfies the designation range.

In contrast, when the degree of coincidence between user input data or an attribute value designated by a check box and an exploration target audio signal falls within the designation range, the corresponding portion on the time waveform in the result window WD13 is highlighted.

In this case, a portion, on the time waveform in the result window WD13, corresponding to a time section in which the degree of coincidence with respect to the user input data or an attribute value designated by the check box falls within the designation range is highlighted (emphasized).

In this example, a portion corresponding to a section T11 is highlighted. It can be seen that, in the section T11, the degree of coincidence with respect to the attribute value "sound of footsteps" falls within the designation range designated by the range designating bar V22. It is to be noted that the highlighting may be implemented by any method such as a method of performing flash display or a method of performing contour emphasis display, as long as the highlighted portion is displayed in a different way from the remaining portions.

In addition, in the exploration tool, for example, a highlighted time section is extracted from a time section, of the exploration target audio signal, designated by the select window WD12, and an audio file including a new audio signal obtained by the extraction is saved.

It is to be noted that a portion, of the entire exploration target audio signal, corresponding to a time section in which the degree of coincidence with respect to user input data or an attribute value designated by a check box falls within the designation range may be extracted, so that an audio file to be saved is generated.

In addition, when the filtering function is used, check marks may be simultaneously displayed in a plurality of check boxes such that designation of multiple sets of user input data or attribute values is permitted.

For example, it is assumed that a state where check marks are displayed in the check box BX21 and the check box BX22 is established by a user operation.

In such a case, a time section in which the degree of coincidence with respect to user input data falls within the designation range designated by the range designating bar V21 and the degree of coincidence with respect to the attribute value "sound of footsteps" falls within the designation range designated by the range designating bar V22, is highlighted on the time waveform in the result window WD13.

Similarly, in a case where check marks are displayed in check boxes of two or more attributes, a time section in which the degrees of coincidence with respect to the respective attribute values each fall within the designation range of the attribute value is highlighted.

By the systems explained so far, an exploration for a desired sound can be conducted not only through a trial-listening confirmation but also through a visual confirmation, so that the work cost of conducting the exploration can be reduced.

### <Configuration Example of Information Processing Device>

Next, a configuration example of an information processing device for implementing the aforementioned exploration tool will be explained.

FIG. 10 is a diagram depicting a configuration example of an information processing device to which the present technology is applied.

An information processing device 11 depicted in FIG. 10 includes a personal computer, for example, and implements an exploration tool to which the present technology is applied. In addition, a display section 12 is connected to the information processing device 11. A screen of the exploration tool, that is, the aforementioned exploration screen is displayed on the display section 12.

It is to be noted that an example in which the display section 12 is separated from the information processing device 11 will be explained hereinbelow, but the display section 12 may be disposed inside the information processing device 11.

The information processing device 11 includes an audio-signal acquisition section 21, a user-input-data acquisition section 22, a degree-of-coincidence calculation section 23, a filtering-information acquisition section 24, and a display control section 25.

The audio-signal acquisition section 21 acquires an audio signal as an exploration target input signal and supplies the audio signal to the degree-of-coincidence calculation section 23 and the display control section 25.

For example, in response to a file designating operation such as an operation performed on the file button BT11, the audio-signal acquisition section 21 acquires, from a recording section or the like (not depicted), an audio file designated by a user, that is, an exploration target audio signal.

The user-input-data acquisition section 22 acquires user input data given by the user and supplies the user input data to the degree-of-coincidence calculation section 23 and the display control section 25.

For example, in response to a user operation such as an operation performed on the query button BT13 (file designating operation) or an input operation performed in the text box BX11, the user-input-data acquisition section 22 acquires, as user input data, at least one of text information, an audio signal, a still-image signal, and a video signal.

In addition, in a case where a designating operation (input operation) of user input data is not performed by the user, the user-input-data acquisition section 22 generates flag information indicating that there is no user input data and supplies the flag information to the degree-of-coincidence calculation section 23 and the display control section 25.

The degree-of-coincidence calculation section 23 includes the aforementioned neural network or the like. The degree-of-coincidence calculation section 23 calculates the degree of coincidence on the basis of the exploration target audio signal supplied from the audiosignal acquisition section 21 and the user input data or flag information supplied from the user-input-data acquisition section 22 and supplies the calculation result to the display control section 25.

For example, in a case where the flag information indicating that there is no user input data is supplied, the degree-of-coincidence calculation section 23 calculates the degree of coincidence between the exploration target audio signal and each attribute value by the method that has been explained in "1-1. System of Displaying Degrees of Coincidence by Using Colors Corresponding to Attribute Values Regarding Each Predetermined Sound Attribute."

For example, in a case where user input data is supplied, the degree-of-coincidence calculation section 23 calculates the degree of coincidence on the basis of the exploration target audio signal and the user input data, by the method that has been explained in "1-2. System of Displaying Degree of Coincidence With Respect to Data Given by User, by Using Color."

In response to a user's operation regarding the user input data and an attribute value performed on a check box and a range designating bar, the filtering-information acquisition section 24 acquires, as filtering information for a filtering function, information indicating user input data, an attribute value, a designation range, or the like designated by the user and supplies the information to the display control section 25.

In a case where the user inputs (designates) no filtering information, the filtering-information acquisition section 24 generates flag information indicating that there is no filtering information and supplies the flag information to the display control section 25.

The display control section 25 controls the display section 12 on the basis of the audio signal supplied from the audio-signal acquisition section 21, the degree of coincidence supplied from the degree-of-coincidence calculation section 23, the user input data or flag information supplied from the user-input-data acquisition section 22, and the filtering information or flag information supplied from the filtering-information acquisition section 24 such that an exploration screen is displayed on the display section 12. That is, the display control section 25 converts a sound feature which is the degree of coincidence of an exploration target audio signal into a visual feature which is a color and causes the display section 12 to display the visual feature together with the time waveform of the audio signal.

For example, in a case where the flag information indicating that there is no user input data is supplied, the display control section 25 causes the display section 12 to display an exploration screen on the basis of the degree of coincidence supplied from the degree-of-coincidence calculation section 23 by the method that has been explained in "1-1. System of Displaying Degrees of Coincidence by Using Colors Corresponding to Attribute Values Regarding Each Predetermined Sound Attribute." In this case, the exploration screen depicted in FIG. 2 is displayed, for example.

For example, in a case where user input data is supplied from the user-input-data acquisition section 22, the display control section 25 causes the display section 12 to display an exploration screen on the basis of the degree of coincidence supplied from the degree-of-coincidence calculation section 23 by the method that has been explained in "1-2. System of Displaying Degree of Coincidence With Respect to Data Given by User, by Using Color." In this case, the exploration screen depicted in FIG. 4 is displayed, for example.

Further, in response to supply of the filtering information, the display control section 25 executes a process for implementing the filtering function which has been explained in "2. System Having Filtering Function."

That is, in a case where the filtering information is supplied from the filtering-information acquisition section 24 to the display control section 25, the display control section 25 executes, as a filtering process, at least one of a highlight display process and a saving process on the basis of the filtering information.

The highlighting process refers to a process of highlighting (emphasizing) a time section, on the time waveform in the result window WD13, in which the degree of coincidence with respect to an attribute value designated by a user or to user input data falls within the designation range.

In addition, the saving process refers to a process of generating an audio file to be saved, by extracting a signal of a time section, of the exploration target audio signal, in which the degree of coincidence with respect to an attribute value designated by the user or to user input data falls within the designation range, and causing the generated audio file to be saved in a recording section (not depicted) or the like.

On the other hand, in a case where the flag information indicating that there is no filtering information is supplied from the filtering-information acquisition section 24 to the display control section 25, the display control section 25 does not execute any process for implementing the filtering function.

### <Explanation of Display Process>

Next, operation of the information processing device 11 will be explained. Specifically, the display process which is executed by the information processing device 11 will be explained with reference to a flowchart in FIG. 11.

At step S11, the audio-signal acquisition section 21 acquires an exploration target audio signal according to a user operation performed on the file button BT11 or the like and supplies the audio signal to the degree-of-coincidence calculation section 23 and the display control section 25.

At step S12, the user-input-data acquisition section 22 determines whether or not an input operation of user input data has been performed.

In a case where, for example, the query button BT13 has been operated or an input operation to the text box BX11 has been performed on the exploration screen, it is determined that the input operation has been performed.

In a case where it is determined, at step S12, that the input operation has been performed, the user-input-data acquisition section 22 acquires the user input data according to the user's input operation at step S13 and supplies the user input data to the degree-of-coincidence calculation section 23 and the display control section 25.

At step S14, the degree-of-coincidence calculation section 23 calculates the degree of coincidence on the basis of the exploration target audio signal supplied from the audio-signal acquisition section 21 and the user input data supplied from the user-input-data acquisition section 22 and supplies the calculation result to the display control section 25.

For example, in a case where an audio signal is supplied as the user input data, the degree-of-coincidence calculation section 23 inputs both the exploration target audio signal and the user input data into the neural network to obtain the matrix E1 and the matrix E2, in the manner that has been explained with reference to FIGS. 5 to 7.

Then, the degree-of-coincidence calculation section 23 calculates the cosine similarity of each time section on the basis of the matrix E1 and the matrix E2, to thereby calculate the degree of coincidence of each time section.

For example, in a case where a still-image signal or a video signal is supplied as the user input data, the degree-of-coincidence calculation section 23 calculates the degree of coincidence between the exploration target audio signal, that is, a video signal of video content and the user input data, in a manner similar to that in the case where the user input data is an audio signal.

Moreover, for example, in a case where text information is supplied as the user input data, the degree-of-coincidence calculation section 23 calculates the text similarity between each attribution value and the user input data, in the manner that has been explained with reference to FIG. 8. Then, the degree-of-coincidence calculation section 23 adopts, as the degree of coincidence between the exploration target audio signal and the user input data, the existence probability of an attribute value (similarity attribute value) having the highest text similarity, among the existence probabilities of attribute values obtained as a result of an input of the exploration target audio signal to the neural network.

After the degree of coincidence is calculated in the aforementioned manner, the process proceeds to step S17.

In a case where it is determined, at step S12, that an operation of inputting user input data has not been performed, the user-input-data acquisition section 22 generates, at step S15, flag information indicating that there is no user input data and supplies the flag information to the degree-of-coincidence calculation section 23 and the display control section 25.

At step S16, the degree-of-coincidence calculation section 23 calculates the degree of coincidence on the basis of the exploration target audio signal supplied from the audio-signal acquisition section 21, according to the flag information indicating that there is no user input data and having been supplied from the user-input-data acquisition section 22.

For example, in the manner that has been explained with reference to FIG. 3, the degree-of-coincidence calculation section 23 calculates, as the degrees of coincidence between the exploration target audio signal and each attribute value, the existence probabilities with respect to the attribute values for each time section by inputting the exploration target audio signal to the neural network to execute computation.

Here, by obtaining the average value or the maximum value of the degrees of coincidence of multiple successive time sections with respect to each attribute value, the degree-of-coincidence calculation section 23 may calculate the degree of coincidence for each longer time section including the multiple time sections, that is, for each fixed time interval, in the aforementioned manner.

In addition, for example, the degree-of-coincidence calculation section 23 may perform shot switching detection on a video signal of video content, in the aforementioned manner, and calculate the degree of coincidence of each display time section having a variable length, from the detection result and an output from the neural network.

Moreover, for example, the degree-of-coincidence calculation section 23 may calculate the final degree of coincidence with respect to each attribute value by performing filtering using the low-pass filter on the existence probabilities obtained as outputs from the neural network, in the aforementioned manner.

After calculating the degree of coincidence between the exploration target audio signal and each attribute value in the aforementioned manner, the degree-of-coincidence calculation section 23 supplies the calculated degree of coincidence to the display control section 25. Then, the process proceeds to step S17.

It is to be noted that, also in a case where the degree of coincidence with respect to the user input data is calculated at step S14, the degree of coincidence may be calculated for each fixed time interval or for each display time section, and filtering using a low-pass filter may be performed on the degree of coincidence, as in the case of calculating the degrees of coincidence with the respective attribute values.

After the degree of coincidence is calculated at step S14 or step S16, step S17 is executed.

That is, at step S17, the filtering-information acquisition section 24 determines whether or not an operation of designating filtering information has been performed.

For example, in a case where a user operation or the like is performed on check boxes and range designating bars for user input data and attribute values on the exploration screen and a designation range or the like is designated by the user, it is determined that an operation of designating the filtering information has been performed.

In a case where it is determined, at step S17, that the designating operation has been performed, the filtering-information acquisition section 24 acquires filtering information according to the user designation operation at step S18 and supplies the filtering information to the display control section 25.

For example, information indicating the designated user input data and attribute values, that is, information indicating the user input data and attribute values for which check marks are displayed in the check boxes, and information indicating the designation range designated by an operation performed on the range designating bars are acquired as the filtering information.

At step S19, the display control section 25 controls the display section 12 on the basis of the audio signal supplied from the audio-signal acquisition section 21, the degree of coincidence supplied from the degree-of-coincidence calculation section 23, and the filtering information supplied from the filtering-information acquisition section 24 and causes the display section 12 to display the exploration screen.

Specifically, for example, in a case where the degree of coincidence with respect to each attribute value is supplied as a result of execution of step S16, the display control section 25 causes the exploration screen to be displayed on the basis of the exploration target audio signal, the degree of coincidence with respect to each attribute value, and the filtering information.

In this case, as depicted in FIG. 9, for example, the entire time waveform of the exploration target audio signal is displayed in the overview window WD11, and a portion, of the time waveform, of the time section designated by the select window WD12 is displayed in the result window WD13.

Particularly in this case, the time waveform is displayed, in the result window WD13, by using colors corresponding to the attribute values, according to the degrees of coincidence with respect to the respective attribute values, in the manner that has been explained with reference to FIGS. 2 and 9. In addition, a portion of a time section in which the degrees of coincidence with respect to the respective attribution values indicated by the filtering information each fall within the designation range indicated by the filtering information, is highlighted in the result window WD13.

On the other hand, for example, in a case where the degree of coincidence with respect to the user input data is supplied as a result of execution of step S14, the display control section 25 causes the exploration screen to be displayed on the basis of the exploration target audio signal, the degree of coincidence with respect to the user input data, and the filtering information.

In this case, the entire time waveform of the exploration target audio signal is displayed in the overview window WD11, and a portion, of the time waveform, of a time section designated by the select window WD12 is displayed in the result window WD13, as in the example depicted in FIG. 4, for example. Moreover, in the result window WD13, each time section of the time waveform is displayed by a gradation in color according to the degree of coincidence, and a portion of a time section in which the degree of coincidence falls within the designation range is highlighted.

It is to be noted that, in a case where a state in which check marks are displayed in a check box for the user input data and a check box for an attribute value is established, both step S14 and step S16 are executed, as appropriate, to perform highlighting.

In addition to displaying the exploration screen according to the filtering information, the display control section 25 may further generate an audio file including an audio signal of the highlighted time section and cause the audio file to be saved, for example.

In this case, the display control section 25 extracts the highlighted time section from the portion, of the exploration target audio signal, of the time section designated by the select window WD12. Then, the display control section 25 generates an audio file including the signal of the extracted time section and causes the audio file to be saved (recorded) in a recording section (not depicted). In this case, the filtering information or the like may be included in the audio file.

After the exploration screen is displayed in the aforementioned manner, the display process ends.

Further, in a case where it is determined, at step S17, that any designating operation has not been performed, the filtering-information acquisition section 24 generates, at step S20, flag information indicating that there is no filtering information and supplies the flag information to the display control section 25.

At step S21, the display control section 25 controls the display section 12 on the basis of the audio signal supplied from the audio-signal acquisition section 21 and the degree of coincidence supplied from the degree-of-coincidence calculation section 23, according to the flag information indicating that there is no filtering information and having been supplied from the filtering-information acquisition section 24, and causes the display section 12 to display the exploration screen.

Specifically, for example, in a case where the degree of coincidence with respect to each attribute value is supplied as a result of execution of step S16, the display control section 25 causes the exploration screen to be displayed on the basis of the exploration target audio signal and the degree of coincidence with respect to each attribute value. Accordingly, the exploration screen depicted in FIG. 2, for example, is displayed.

Also, for example, in a case where the degree of coincidence with respect to the user input data is supplied as a result of execution of step S14, the display control section 25 causes the exploration screen to be displayed on the basis of the degree of coincidence with respect to the user input data and the exploration target audio signal. Accordingly, the exploration screen depicted in FIG. 4, for example, is displayed.

At step S21, a process similar to that in step S19 is executed, except for implementation of the filtering function. After the exploration screen is displayed in this manner, the display process ends.

As explained so far, the information processing device 11 calculates the degree of coincidence of an exploration target audio signal and causes an exploration screen to be displayed on the basis of the calculation result.

Accordingly, the work of exploring for a desired sound, which has been conducted through a trial-listening confirmation, can also be performed by a visual confirmation. Consequently, the work cost of exploring for a desired sound can be reduced, and a time to produce and manage content can be shortened.

### <Second Embodiment>

### <Another Configuration Example of Information Processing Device>

Meanwhile, a work of rearranging audio signals obtained by sound source separation, in multiple channels, as explained above in "(2. (Production) Exploration for Desired Sound from Sounds Obtained by Sound Source Separation)," may be performed.

Then, sound source separation may be performed on an audio signal designated by a user, and a plurality of audio signals obtained as a result of the sound source separation may be used as exploration target audio signals.

In such a case, the information processing device 11 have a configuration depicted in FIG. 12, for example. It is to be noted that a section in FIG. 12 corresponding to that in FIG. 10 is denoted by the same reference symbol, and an explanation thereof will be omitted, as appropriate.

The configuration of the information processing device 11 depicted in FIG. 12 is different from the configuration of the information processing device 11 depicted in FIG. 10 in that the information processing device 11 depicted in FIG. 12 further includes a sound-source separation section 51. The remaining sections are identical to those in the information processing device 11 in FIG. 10.

In FIG. 12, the sound-source separation section 51 is disposed between the audio-signal acquisition section 21 and the degree-of-coincidence calculation section 23.

The sound-source separation section 51 separates, from an audio signal supplied from the audio-signal acquisition section 21, into audio signals based on a plurality of predetermined sound source types and supplies the obtained audio signals to the degree-of-coincidence calculation section 23 and the display control section 25.

Here, an audio signal inputted to the sound-source separation section 51 is separated into audio signals of types including a "human voice," a "sudden sound," and a "music sound," for example. Accordingly, the degree-of-coincidence calculation section 23 calculates, for each of the audio signals of the sound source types including a "human voice," a "sudden sound," and a "music sound," the degree of coincidence with respect to an attribute value or user input data.

In a case where the information processing device 11 has the configuration depicted in FIG. 12, the exploration screen depicted in FIG. 13, for example, is displayed on the display section 12. It is to be noted that a part in FIG. 13 corresponding to that in FIG. 2 is denoted by the same reference symbol, and an explanation thereof will be omitted, as appropriate.

In the example in FIG. 13, three result windows WD31 to WD33 are provided for one overview window WD11.

The time waveform of a time section, of the audio signal of the sound source type "human voice" obtained as a result of the sound source separation, selected by the select window WD12 is displayed in the result window WD31. In particular, color display of the time waveform is performed in the result window WD31 on the basis of the degrees of coincidence between the audio signal of the sound source type "human voice" obtained after the sound source separation and the respective attribute values, as in the example in FIG. 2.

In addition, the time waveform of a time section, of the audio signal of the sound source type "sudden sound" obtained through the sound source separation, selected by the select window WD12 is displayed in the result window WD32. Furthermore, the time waveform of a time section, of the audio signal of the sound source type "music sound" obtained through the sound source separation, selected by the select window WD12 is displayed in the result window WD33.

Color display of the time waveform is performed also in the result window WD32 and the result window WD33 on the basis of the degrees of coincidence between the audio signal of the sound source type "sudden sound"/"music sound" obtained after the sound source separation and the respective attribute values, as in the result window WD31.

Also in a case where the information processing device 11 has the configuration depicted in FIG. 12, a process similar to the display process which has been explained with reference to FIG. 11 is executed, so that display of the exploration screen depicted in FIG. 13 or the like is performed. However, in this case, the sound source separation process is executed at the sound-source separation section 51 after step S11.

Thus, also in a case where sound source separation is performed on an audio signal, the work of exploring a desired sound can be conducted on audio signals of the respective sound source types through a visual confirmation. Accordingly, the cost of exploring a desired sound can be reduced, and the time to produce and manage content can be shortened.

### <Configuration Example of Computer>

Incidentally, the aforementioned series of processes can be executed by hardware, or can be executed by software. In a case where the series of processes is executed by software, a program forming the software is installed into a computer. Here, examples of the computer include a computer incorporated in dedicated-hardware, and a general-purpose personal computer capable of executing various functions by installing thereinto various programs.

FIG. 14 is a block diagram depicting a hardware configuration example of a computer that executes the aforementioned series of processes in accordance with a program.

In the computer, a CPU (Central Processing Unit) 501, a ROM (Read Only Memory) 502, and a RAM (Random Access Memory) 503 are mutually connected via a bus 504.

An input/output interface 505 is also connected to the bus 504. An input section 506, an output section 507, a recording section 508, a communication section 509, and a drive 510 are connected to the input/output interface 505.

The input section 506 includes a keyboard, a mouse, a microphone, an imaging element, or the like. The output section 507 includes a display, a loud speaker, or the like. The recording section 508 includes a hard disk, a nonvolatile memory, or the like. The communication section 509 includes a network interface or the like. The drive 510 drives a removable recording medium 511 that is a magnetic disk, an optical disk, a magneto-optical disk, a semiconductor memory, or the like.

In the computer having the above configuration, the CPU 501 loads a program recorded in the recording section 508 into the RAM 503 via the input/output interface 505 and the bus 504 and executes the program, for example, so that the aforementioned series of processes is executed.

The program to be executed by the computer (CPU 501) can be provided by being recorded in the removable recording medium 511 that serves as a package medium, for example. Alternatively, the program can be provided through a wired or wireless transmission medium such as a local area network, the internet, or digital satellite broadcasting.

In the computer, when the removable recording medium 511 is attached to the drive 510, the program can be installed into the recording section 508 via the input/output interface 505. Alternatively, the program can be installed into the recording section 508 after being received at the communication section 509 via the wired or wireless transmission medium. Besides, the program may have been previously installed in the ROM 502 or the recording section 508.

It is to be noted that the program which is executed by the computer may be a program for executing the processes in the time-series order explained herein, or may be a program for executing the processes in parallel or at a necessary timing such as a timing when a call is made.

The embodiments according to the present technology are not limited to the aforementioned embodiments, and various changes can be made within the scope of the gist of the present technology.

For example, the present technology can be configured by cloud computing in which one function is shared and cooperatively processed by a plurality of devices over a network.

In addition, the steps having been explained with reference to the aforementioned flowchart may be executed by one device, or may be cooperatively executed by a plurality of devices.

Furthermore, in a case where a plurality of processes is included in one step, the plurality of processes included in the one step may be executed by one device, or may be cooperatively executed by a plurality of devices.

### [Description of Reference Symbols]

- 11:: Information processing device
- 21:: Audio-signal acquisition section
- 22:: User-input-data acquisition section
- 23:: Degree-of-coincidence calculation section
- 24:: Filtering-information acquisition section
- 25:: Display control section
- 51:: Sound-source separation section

## Claims

1. An information processing device (11) comprising:
a user-input-data acquisition section (22) that is configured to acquire user input data given by a user, wherein the user input data indicates an attribute value of an attribute of an audio signal;
an input-signal acquisition section (21) that is configured to acquire an input signal, wherein the input signal includes an audio signal;
a calculation section (23) that is configured to calculate, as a feature included in the input signal, a degree of coincidence with respect to the user input data; the information processing device being **characterised by** further comprising:
a display control section (25) that is configured to convert the feature included in the input signal into a visual feature and cause the visual feature to be displayed.

2. The information processing device (11) according to claim 1, wherein
the user input data includes at least one of an audio signal, text information, a still-image signal, and a video signal.

3. The information processing device (11) according to any one of the previous claims, wherein
the attribute includes at least one of a sound source type, a reverberation level, and a noise level.

4. The information processing device (11) according to claim 3, wherein
the attribute includes the sound source type, and the attribute value includes text information indicating a sound source type.

5. The information processing device (11) according to any one of the previous claims, wherein
the display control section (25) is configured to cause the visual feature to be displayed together with a time waveform of the audio signal that is the input signal.

6. The information processing device (11) according to any one of the previous claims, further comprising:
a filtering-information acquisition section (24) that is configured to acquire filtering information including information indicating a degree-of-coincidence designation range designated by the user, wherein
on a basis of the filtering information, the display control section (25) is configured to execute at least one of a process of emphasizing a time section, of the input signal, in which the degree of coincidence falls within the designation range, and a process of extracting, from the input signal, a signal of the time section in which the degree of coincidence falls within the designation range and saving the extracted signal.

7. The information processing device (11) according to any one of the previous claims, wherein
the calculation section (23) is configured to calculate the degree of coincidence with respect to the attribute value on a basis of an existence probability of a signal corresponding to the attribute value in each of time sections of the input signal, the existence probability being obtained as a result of an input of the input signal to a neural network.

8. The information processing device (11) according to claim 7, wherein
the degree of coincidence with respect to the attribute value includes the existence probability.

9. The information processing device (11) according to any one of claims 1 to 6, wherein
a neural network is configured to receive the input signal as an input and to output an existence probability of a signal corresponding to the attribute value in each of time sections of the input signal, and the calculation section (23) is configured to calculate the degree of coincidence with respect to the user input data on a basis of an output vector in a next-to-last layer of the neural network obtained as a result of an input of the input signal to the neural network, and an output vector obtained as a result of an input of the user input data to the neural network.

10. The information processing device (11) according to claim 9, wherein
the calculation section (23) is configured to calculate the degree of coincidence between the input signal and the user input data by obtaining a cosine similarity between the output vector obtained from the input signal and the output vector obtained from the user input data.

11. The information processing device (11) according to any one of claims 1 to 6, wherein
the input signal includes an audio signal of video content, and
a neural network is configured to receive a video signal of the video content as an input and to output an existence probability of a signal corresponding to the attribute value in each of time sections of the video signal, and the calculation section (23) is configured to calculate the degree of coincidence with respect to the user input data on a basis of an output vector in a next-to-last layer of the neural network obtained as a result of an input of the video signal to the neural network, and an output vector obtained as a result of an input of a still-image signal or a video signal as the user input data to the neural network.

12. The information processing device (11) according to any one of claims 1 to 6, wherein
the user input data and the attribute value include text information, and
the calculation section (23) is configured to obtain a text similarity between the user input data and a plurality of the attribute values and adopt, as the degree of coincidence between the user input data and the input signal, the degree of coincidence between the input signal and an attribute value that has the highest text similarity.

13. The information processing device (11) according to any one of the previous claims, wherein
the calculation section (23) is configured to calculate a final degree of coincidence by performing filtering using a low-pass filter on respective degrees of coincidence of multiple time sections.

14. An information processing method executed by an information processing device, comprising:
acquiring user input data given by a user, wherein the user input data indicates an attribute value of an attribute of an audio signal;
acquiring an input signal, wherein the input signal includes an audio signal;
calculating, as a feature included in the input signal, a degree of coincidence with respect to the user input data;
the information processing method being **characterised by** further comprising:
converting the feature included in the input signal into a visual feature and causing the visual feature to be displayed.

15. A program for causing a computer to execute a process of:
acquiring user input data given by a user, wherein the user input data indicates an attribute value of an attribute of an audio signal;
acquiring an input signal, wherein the input signal includes an audio signal;
calculating, as a feature included in the input signal, a degree of coincidence with respect to the user input data;
the process being **characterised by** further comprising:
converting the feature included in the input signal into a visual feature and causing the visual feature to be displayed.

## Patentansprüche

1. Informationsverarbeitungsvorrichtung (11), umfassend:
einen Benutzereingabedatenerfassungsabschnitt (22), der konfiguriert ist, um Benutzereingabedaten zu erfassen, die durch einen Benutzer bereitgestellt werden, wobei die Benutzereingabedaten einen Attributwert eines Attributs eines Audiosignals angeben;
einen Eingabesignalerfassungsabschnitt (21), der konfiguriert ist, um ein Eingabesignal zu erfassen, wobei das Eingabesignal ein Audiosignal einschließt;
einen Berechnungsabschnitt (23), der konfiguriert ist, um, als ein Merkmal, das in dem Eingabesignal eingeschlossen ist, einen Übereinstimmungsgrad in Bezug auf die Benutzereingabedaten zu berechnen; wobei die Informationsverarbeitungsvorrichtung **dadurch gekennzeichnet ist, dass** sie ferner umfasst:
einen Anzeigesteuerabschnitt (25), der konfiguriert ist, um das Merkmal, das in dem Eingabesignal eingeschlossen ist, in ein visuelles Merkmal umzuwandeln und zu bewirken, dass das visuelle Merkmal angezeigt wird.

2. Informationsverarbeitungsvorrichtung (11) nach Anspruch 1, wobei
die Benutzereingabedaten mindestens eines von einem Audiosignal, Textinformationen, einem Standbildsignal und einem Videosignal einschließen.

3. Informationsverarbeitungsvorrichtung (11) nach einem der vorstehenden Ansprüche, wobei
das Attribut mindestens eines von einer Klangquellenart, einem Nachhallpegel und einem Geräuschpegel einschließt.

4. Informationsverarbeitungsvorrichtung (11) nach Anspruch 3, wobei
das Attribut die Klangquellenart einschließt und der Attributwert Textinformationen einschließt, die eine Klangquellenart angeben.

5. Informationsverarbeitungsvorrichtung (11) nach einem der vorstehenden Ansprüche, wobei
der Anzeigesteuerabschnitt (25) konfiguriert ist, um zu bewirken, dass das visuelle Merkmal zusammen mit einer Zeitwellenform des Audiosignals angezeigt wird, das das Eingabesignal ist.

6. Informationsverarbeitungsvorrichtung (11) nach einem der vorstehenden Ansprüche, ferner umfassend:
einen Filterinformationserfassungsabschnitt (24), der konfiguriert ist, um Filterinformationen zu erfassen, die Informationen einschließen, die einen Bestimmungsbereich des Übereinstimmungsgrads angeben, der durch den Benutzer bestimmt wird, wobei
auf einer Basis der Filterinformationen, der Anzeigesteuerabschnitt (25) konfiguriert ist, um mindestens einen von einem Prozess eines Hervorhebens eines Zeitabschnitts, des Eingabesignals, in dem der Übereinstimmungsgrad innerhalb des Bestimmungsbereichs fällt, und einem Prozess eines Extrahierens, aus dem Eingabesignal, eines Signals des Zeitabschnitts, in dem der Übereinstimmungsgrad innerhalb des Bestimmungsbereichs fällt, und eines Speicherns des extrahierten Signals auszuführen.

7. Informationsverarbeitungsvorrichtung (11) nach einem der vorstehenden Ansprüche, wobei
der Berechnungsabschnitt (23) konfiguriert ist, um den Übereinstimmungsgrad in Bezug auf den Attributwert auf einer Basis einer Existenzwahrscheinlichkeit eines Signals zu berechnen, das dem Attributwert in jedem der Zeitabschnitte des Eingabesignals entspricht, wobei die Existenzwahrscheinlichkeit als ein Ergebnis einer Eingabe des Eingabesignals in ein neuronales Netzwerk erhalten wird.

8. Informationsverarbeitungsvorrichtung (11) nach Anspruch 7, wobei
der Übereinstimmungsgrad in Bezug auf den Attributwert die Existenzwahrscheinlichkeit einschließt.

9. Informationsverarbeitungsvorrichtung (11) nach einem der Ansprüche 1 bis 6, wobei
ein neuronales Netzwerk konfiguriert ist, um das Eingabesignal als eine Eingabe zu empfangen und um eine Existenzwahrscheinlichkeit eines Signals auszugeben, das dem Attributwert in jedem der Zeitabschnitte des Eingabesignals entspricht, und der Berechnungsabschnitt (23) konfiguriert ist, um den Übereinstimmungsgrad in Bezug auf die Benutzereingabedaten auf einer Basis eines Ausgabevektors in einer vorletzten Schicht des neuronalen Netzwerks, der als ein Ergebnis einer Eingabe des Eingabesignals in das neuronale Netzwerk erhalten wird, und eines Ausgabevektors, der als ein Ergebnis einer Eingabe der Benutzereingabedaten in das neuronale Netzwerk erhalten wird, zu berechnen.

10. Informationsverarbeitungsvorrichtung (11) nach Anspruch 9, wobei
der Berechnungsabschnitt (23) konfiguriert ist, um den Übereinstimmungsgrad zwischen dem Eingabesignal und den Benutzereingabedaten durch das Erhalten einer Kosinusähnlichkeit zwischen dem Ausgabevektor, der aus dem Eingabesignal erhalten wird, und dem Ausgabevektor, der aus den Benutzereingabedaten erhalten wird, zu berechnen.

11. Informationsverarbeitungsvorrichtung (11) nach einem der Ansprüche 1 bis 6, wobei
das Eingabesignal ein Audiosignal von Videoinhalt einschließt und
ein neuronales Netzwerk konfiguriert ist, um ein Videosignal des Videoinhalts als eine Eingabe zu empfangen und um eine Existenzwahrscheinlichkeit eines Signals, das dem Attributwert entspricht, in jedem der Zeitabschnitte des Videosignals auszugeben, und der Berechnungsabschnitt (23) konfiguriert ist, um den Übereinstimmungsgrad in Bezug auf die Benutzereingabedaten auf einer Basis eines Ausgabevektors in einer vorletzten Schicht des neuronalen Netzwerks, der als ein Ergebnis einer Eingabe des Videosignals in das neuronale Netzwerk erhalten wird, und eines Ausgabevektors, der als ein Ergebnis einer Eingabe eines Standbildsignals oder eines Videosignals als die Benutzereingabedaten in das neuronale Netzwerk erhalten wird, zu berechnen.

12. Informationsverarbeitungsvorrichtung (11) nach einem der Ansprüche 1 bis 6, wobei
die Benutzereingabedaten und der Attributwert Textinformationen einschließen und
der Berechnungsabschnitt (23) konfiguriert ist, um eine Textähnlichkeit zwischen den Benutzereingabedaten und einer Vielzahl der Attributwerte zu erhalten und, als den Übereinstimmungsgrad zwischen den Benutzereingabedaten und dem Eingabesignal, den Übereinstimmungsgrad zwischen dem Eingabesignal und einem Attributwert, der die höchste Textähnlichkeit aufweist, zu übernehmen.

13. Informationsverarbeitungsvorrichtung (11) nach einem der vorstehenden Ansprüche, wobei
der Berechnungsabschnitt (23) konfiguriert ist, um einen endgültigen Übereinstimmungsgrad durch ein Durchführen eines Filterns unter Verwendung eines Tiefpassfilters an jeweiligen Übereinstimmungsgraden mehrerer Zeitabschnitte zu berechnen.

14. Informationsverarbeitungsverfahren, das durch eine Informationsverarbeitungsvorrichtung ausgeführt wird, umfassend:
Erfassen von Benutzereingabedaten, die durch einen Benutzer bereitgestellt werden, wobei die Benutzereingabedaten einen Attributwert eines Attributs eines Audiosignals angeben;
Erfassen eines Eingabesignals, wobei das Eingabesignal ein Audiosignal einschließt;
Berechnen, als ein Merkmal, das in dem Eingabesignal eingeschlossen ist, eines Übereinstimmungsgrades in Bezug auf die Benutzereingabedaten; wobei das Informationsverarbeitungsverfahren **dadurch gekennzeichnet ist, dass** es ferner umfasst:
Umwandeln des Merkmals, das in dem Eingabesignal eingeschlossen ist, in ein visuelles Merkmal und Bewirken, dass das visuelle Merkmal angezeigt wird.

15. Programm zum Bewirken, dass ein Computer einen Prozess ausführt zum:
Erfassen von Benutzereingabedaten, die durch einen Benutzer bereitgestellt werden, wobei die Benutzereingabedaten einen Attributwert eines Attributs eines Audiosignals angeben;
Erfassen eines Eingabesignals, wobei das Eingabesignal ein Audiosignal einschließt;
Berechnen, als ein Merkmal, das in dem Eingabesignal eingeschlossen ist, eines Übereinstimmungsgrades in Bezug auf die Benutzereingabedaten; wobei der Prozess **dadurch gekennzeichnet ist, dass** er ferner umfasst:
Umwandeln des Merkmals, das in dem Eingabesignal eingeschlossen ist, in ein visuelles Merkmal und Bewirken, dass das visuelle Merkmal angezeigt wird.

## Revendications

1. Dispositif de traitement d'informations (11) comprenant :
une section d'acquisition de données d'entrée utilisateur (22) qui est configurée pour acquérir des données d'entrée utilisateur données par un utilisateur, dans lequel les données d'entrée utilisateur indiquent une valeur d'attribut d'un attribut d'un signal audio ;
une section d'acquisition de signal d'entrée (21) qui est configurée pour acquérir un signal d'entrée, dans lequel le signal d'entrée comporte un signal audio ;
une section de calcul (23) qui est configurée pour calculer, en tant que caractéristique incluse dans le signal d'entrée, un degré de coïncidence par rapport aux données d'entrée utilisateur ; le dispositif de traitement d'informations étant **caractérisé en ce qu'**il comprend en outre :
une section de commande d'affichage (25) qui est configurée pour convertir la caractéristique incluse dans le signal d'entrée en une caractéristique visuelle et provoquer l'affichage de la caractéristique visuelle.

2. Dispositif de traitement d'informations (11) selon la revendication 1, dans lequel
les données d'entrée utilisateur comportent au moins l'un parmi un signal audio, des informations textuelles, un signal d'image fixe et un signal vidéo.

3. Dispositif de traitement d'informations (11) selon l'une quelconque des revendications précédentes, dans lequel
l'attribut comporte au moins l'un parmi un type de source sonore, un niveau de réverbération et un niveau de bruit.

4. Dispositif de traitement d'informations (11) selon la revendication 3, dans lequel
l'attribut comporte le type de source sonore, et la valeur d'attribut comporte des informations textuelles indiquant un type de source sonore.

5. Dispositif de traitement d'informations (11) selon l'une quelconque des revendications précédentes, dans lequel
la section de commande d'affichage (25) est configurée pour provoquer l'affichage de la caractéristique visuelle conjointement à une forme d'onde temporelle du signal audio qui est le signal d'entrée.

6. Dispositif de traitement d'informations (11) selon l'une quelconque des revendications précédentes, comprenant en outre :
une section d'acquisition d'informations de filtrage (24) qui est configurée pour acquérir des informations de filtrage comportant des informations indiquant une plage de désignation de degré de coïncidence désignée par l'utilisateur, dans lequel
sur une base des informations de filtrage, la section de commande d'affichage (25) est configurée pour exécuter au moins l'un parmi un processus de mise en évidence d'une section temporelle du signal d'entrée, dans laquelle le degré de coïncidence se situe dans la plage de désignation, et un processus d'extraction, à partir du signal d'entrée, d'un signal de la section temporelle dans laquelle le degré de coïncidence se situe dans la plage de désignation et la sauvegarde du signal extrait.

7. Dispositif de traitement d'informations (11) selon l'une quelconque des revendications précédentes, dans lequel
la section de calcul (23) est configurée pour calculer le degré de coïncidence par rapport à la valeur d'attribut sur une base d'une probabilité d'existence d'un signal correspondant à la valeur d'attribut dans chacune des sections temporelles du signal d'entrée, la probabilité d'existence étant obtenue en conséquence d'une entrée du signal d'entrée dans un réseau neuronal.

8. Dispositif de traitement d'informations (11) selon la revendication 7, dans lequel
le degré de coïncidence par rapport à la valeur d'attribut comporte la probabilité d'existence.

9. Dispositif de traitement d'informations (11) selon l'une quelconque des revendications 1 à 6, dans lequel
un réseau neuronal est configuré pour recevoir le signal d'entrée en tant qu'entrée et pour délivrer en sortie une probabilité d'existence d'un signal correspondant à la valeur d'attribut dans chacune des sections temporelles du signal d'entrée, et la section de calcul (23) est configurée pour calculer le degré de coïncidence par rapport aux données d'entrée utilisateur sur une base d'un vecteur de sortie dans une avant-dernière couche du réseau neuronal obtenue en conséquence d'une entrée du signal d'entrée vers le réseau neuronal, et d'un vecteur de sortie obtenu en conséquence d'une entrée des données d'entrée utilisateur dans le réseau neuronal.

10. Dispositif de traitement d'informations (11) selon la revendication 9, dans lequel
la section de calcul (23) est configurée pour calculer le degré de coïncidence entre le signal d'entrée et les données d'entrée utilisateur en obtenant une similarité cosinus entre le vecteur de sortie obtenu à partir du signal d'entrée et le vecteur de sortie obtenu à partir des données d'entrée utilisateur.

11. Dispositif de traitement d'informations (11) selon l'une quelconque des revendications 1 à 6, dans lequel
le signal d'entrée comporte un signal audio de contenu vidéo, et
un réseau neuronal est configuré pour recevoir un signal vidéo du contenu vidéo en tant qu'entrée et pour délivrer en sortie une probabilité d'existence d'un signal correspondant à la valeur d'attribut dans chacune des sections temporelles du signal vidéo, et la section de calcul (23) est configurée pour calculer le degré de coïncidence par rapport aux données d'entrée utilisateur sur une base d'un vecteur de sortie dans une avant-dernière couche du réseau neuronal obtenu en conséquence d'une entrée du signal vidéo dans le réseau neuronal, et un vecteur de sortie obtenu en conséquence d'une entrée d'un signal d'image fixe ou d'un signal vidéo en tant que données d'entrée utilisateur dans le réseau neuronal.

12. Dispositif de traitement d'informations (11) selon l'une quelconque des revendications 1 à 6, dans lequel
les données d'entrée utilisateur et la valeur d'attribut comportent des informations textuelles, et
la section de calcul (23) est configurée pour obtenir une similarité de texte entre les données d'entrée utilisateur et une pluralité de valeurs d'attribut et adopter, en tant que degré de coïncidence entre les données d'entrée utilisateur et le signal d'entrée, le degré de coïncidence entre le signal d'entrée et une valeur d'attribut qui a la similarité de texte la plus élevée.

13. Dispositif de traitement d'informations (11) selon l'une quelconque des revendications précédentes, dans lequel
la section de calcul (23) est configurée pour calculer un degré final de coïncidence en réalisant un filtrage à l'aide d'un filtre passe-bas sur des degrés respectifs de coïncidence de multiples sections temporelles.

14. Procédé de traitement d'informations exécuté par un dispositif de traitement d'informations, comprenant :
l'acquisition de données d'entrée utilisateur données par un utilisateur, dans lequel les données d'entrée utilisateur indiquent une valeur d'attribut d'un attribut d'un signal audio ;
l'acquisition d'un signal d'entrée, dans lequel le signal d'entrée comporte un signal audio ;
le calcul, en tant que caractéristique incluse dans le signal d'entrée, d'un degré de coïncidence par rapport aux données d'entrée utilisateur ; le procédé de traitement d'informations étant **caractérisé en ce qu'**il comprend en outre :
la conversion de la caractéristique incluse dans le signal d'entrée en une caractéristique visuelle et le fait de provoquer l'affichage de la caractéristique visuelle.

15. Programme permettant d'amener un ordinateur à exécuter un processus consistant à :
acquérir des données d'entrée utilisateur données par un utilisateur, dans lequel les données d'entrée utilisateur indiquent une valeur d'attribut d'un attribut d'un signal audio ;
acquérir un signal d'entrée, dans lequel le signal d'entrée comporte un signal audio ;
calculer, en tant que caractéristique incluse dans le signal d'entrée, un degré de coïncidence par rapport aux données d'entrée utilisateur ; le processus étant **caractérisé en ce qu'**il comprend en outre :
la conversion de la caractéristique incluse dans le signal d'entrée en une caractéristique visuelle et le fait de provoquer l'affichage de la caractéristique visuelle.
